# EUROPEAN PATENT SPECIFICATION

(11) **EP 3 278 581 B1**
(45) Date of publication and mention of the grant of the patent: **25.12.2019**
(21) Application number: 16706055.7
(22) Date of filing: 28.01.2016
(51) Int. Cl.: H04W 4/90, H04W 4/02

(54) **TECHNIQUES TO SUPPORT EMERGENCY SERVICES**
TECHNIKEN ZUR UNTERSTÜTZUNG DER RETTUNGSDIENSTE
TECHNIQUES POUR PRENDRE EN CHARGE DES SERVICES D'URGENCE

(30) Priority: 03.04.2015 US 201562142963 P; 09.12.2015 US 201514963438
(43) Date of publication of application: 07.02.2018
(73) Proprietor: Qualcomm Incorporated, San Diego, CA 92121-1714 (US)
(72) Inventor: FACCIN, Stefano, San Diego, California 92121-1714 (US); ZHAO, Suli, San Diego, California 92121-1714 (US); EDGE, Stephen, William, San Diego, California 92121-1714 (US)
(74) Representative: Klang, Alexander H.
(86) International application number: PCT/US2016/015362
(87) International publication number: WO 2016/160112

(56) References cited:
- WO-A1-2009/089087
- US-A1- 2009 047 922
- US-A1- 2014 153 559

## Description

### CROSS REFERENCES

The present Application for Patent claims priority to U.S. Patent Application No. 14/963,438 by Faccin et al., entitled "Techniques to Support Emergency Services," filed December 9, 2015; and U.S. Provisional Patent Application No. 62/142,963 by Faccin et al., entitled "Techniques to Support Emergency Services," filed April 3, 2015; each of which is assigned to the assignee hereof.

### BACKGROUND

### FIELD OF THE DISCLOSURE

The present disclosure, for example, relates to wireless communication systems, and more particularly to techniques to support emergency services over Wi-Fi in the 3rd Generation Partnership Project (3GPP).

### DESCRIPTION OF RELATED ART

Wireless communications systems are widely deployed to provide various types of communication content such as voice, video, packet data, messaging, broadcast, and so on. These systems may be multiple-access systems capable of supporting communication with multiple users by sharing the available system resources (e.g., time, frequency, space and power). Examples of such multiple-access systems include code-division multiple access (CDMA) systems, time-division multiple access (TDMA) systems, frequency-division multiple access (FDMA) systems, and orthogonal frequency-division multiple access (OFDMA) systems *(e.g.,* a Long Term Evolution (LTE) system, 3GPP system, *etc.).*

Generally, a wireless multiple-access communications system may include a number of base stations, each simultaneously supporting communication for multiple wireless communication devices, which may be otherwise known as user equipment (UEs). Base stations may communicate with wireless communication devices on downstream links (e.g., downlink channels for transmissions from a base station to a UE) and upstream links *(e.g.,* uplink channels for transmissions from a UE to a base station).

Various architectures are described in current technical specifications for Wi-Fi connectivity in 3GPP. Current technical specifications describe selection of an evolved packet data gateway (ePDG) using conventional domain name system (DNS) mechanisms to obtain the IP address(es) of the ePDG(s) (e.g., for connection to untrusted accesses). For normal services, a UE may provide an ePDG fully qualified domain name (FQDN) as input to a DNS query to obtain the internet protocol (IP) address(es) of the ePDG(s). In response, the UE may receive one or more IP addresses of ePDGs. The UE may then select an IP address corresponding to an ePDG having a same IP version as the local IP address of the UE. However, current 3GPP systems do not provide support for emergency services over a Wireless Local Area Network (WLAN), such as Wi-Fi.

Attention is drawn to WO 2009/089087 A1 describing an apparatus and methods of establishing an emergency voice call include user equipment transmitting, and a first serving core network receiving, a request for an emergency call via a wireless access network. The apparatus and methods further include a determination by the first serving core network of an alternative serving core network. In some aspects, the determination may be made based on a user equipment location from a location retrieval function, which may obtain such information from other network components or from the user equipment. In other aspects, the determination may be based on lack of capability or lack of capacity. Further, the apparatus and methods also include establishment of the emergency call with a second serving core network different from the serving core network based on the determination.

Attention is further drawn to US 2014/153559 A1 describing a method for selecting a gateway node for a terminal which connects to its registered domain via an access domain and, in a predetermined scenario, an intermediate domain, the access domain having an associated domain name system arranged to return an address of a gateway node based on a domain name system query. The method includes using a first part of such a query to identify the registered domain of the terminal to the domain name system and a second part of the query to indicate to the domain name system that it should use a predetermined mapping to return the address of a gateway node based on the query, the predetermined mapping being one which returns an address of a gateway node either in the registered domain or in an intermediate domain based on the registered domain identified in the query and on the access domain.

Further attention is drawn to US 2009/047922 A1 describing an apparatus, and an associated method, for providing an indication of available access types by a wireless device when initiating a session. The wireless device collects information associated with available access types, available through which to communicate, at the location at which the wireless device is positioned. A report is generated that lists the collected information. The report is routed to a network node that analyzes the received information and accesses a database at which information identifying an access type, or domain type, that the wireless device should use pursuant to an emergency, or other, call. A response message is generated and returned to the wireless device. The wireless device utilizes information contained in the response message for further communications.

### SUMMARY

In accordance with the present invention a method, and an apparatus, as set forth in the independent claims, respectively, are provided. Preferred embodiments of the invention are described in the dependent claims.

Mechanisms are needed to enable a UE to establish emergency services (e.g., Internet Protocol (IP) based IP Multimedia Subsystem (IMS) emergency calls) over WLAN (e.g., Wi-Fi) in 3GPP networks. Such mechanisms may help ensure that an ePDG capable of supporting emergency services is selected. Further, such mechanisms may help ensure that an appropriately located ePDG is selected. For example, the selected ePDG may be located in the visiting public land mobile network (VPLMN) for a roaming UE so that IMS emergency calls are routed appropriately. In such case, selection of the ePDG may be under control of the network with which the UE is establishing connectivity for the emergency service, namely the VPLMN, as opposed to the home PLMN (HPLMN), for example. Such mechanisms may rely on knowledge that the connectivity being established is for emergency services, as well as other information regarding the UE, such as a current location of the UE.

A method for wireless communication is described. The method may involve determining that an emergency call is to be initiated by a user equipment (UE). The emergency call may be initiated over a non-cellular technology based at least in part on the determination. The method may include creating an identifier that contains emergency indication information, and the identifier may be transmitted.

The method also may involve transmitting location information associated with the UE.

The method also may involve generating an evolved packet data gateway (ePDG) fully qualified domain name (FQDN). The ePDG FQDN may comprise the indication that the initiated call is an emergency call and may be transmitted. In such case, the indication may comprise a label in front of a host label. Alternatively, the indication may comprise a label in front of an ePDG label.

The method also may involve providing a null public land mobile network (PLMN) label in a PLMN field of the ePDG FQDN.

The UE may be connected to an ePDG associated with a non-emergency call.

The ePDG FQDN may comprise location information associated with the UE. The location information may comprise a label in front of a mobile network code (MNC) label. Alternatively or additionally, the location information comprises at least a public land mobile network (PLMN) to which the UE was last connected, or a last known cell (LKC) to which the UE was connected, or a medium access control (MAC) address of a Wi-Fi access point to which the UE is connected, or a geo-location of the UE, or a combination thereof. Alternatively or additionally, the location information may comprise a label in a public land mobile network (PLMN) field of the ePDG FQDN.

The method also may involve receiving a list of ePDGs based at least in part on the transmitted indication. Further, the method may involve connecting to an ePDG from the list to establish an emergency session. Such connecting may involve disconnecting from a current ePDG, and reconnecting to the current ePDG when the current ePDG is included in the list. Alternatively or additionally, such connecting may involve remaining connected to a current ePDG when the current ePDG is included in the list. Alternatively or additionally, such connecting may involve initiating a procedure to establish a secure internet protocol (IPsec) tunnel, and indicating that the IPsec tunnel is for an emergency session over the cellular first RAT.

Indicating that the IPsec tunnel is for an emergency session may involve providing values for an emergency initial attach and an emergency handover attach as part of the procedure. Alternatively or additionally, indicating that the IPsec tunnel is for an emergency session may involve requesting connectivity with a service type set to indicate emergency service.

The UE may lack a valid subscription with respect to a cellular technology serving a current location of the UE. Alternatively or additionally, the UE may not be able to be authenticated to a cellular technology serving a current location of the UE. Alternatively or additionally, the UE may be unauthorized for packet-switched (PS) service on a cellular technology serving a current location of the UE.

The non-cellular technology may comprise a Wi-Fi technology.

An apparatus for wireless communication is described. The apparatus may include: means for determining that an emergency call is to be initiated by a user equipment (UE); means for initiating the emergency call over a non-cellular technology based at least in part on the determination; means for creating an identifier that contains emergency indication information; and, means for transmitting the identifier. The apparatus may include these and other features to carry out the functions described above and further herein.

Another apparatus for wireless communication is described. The apparatus may include: a processor; memory in electronic communication with the processor; and, instructions stored in the memory. The instructions may be executable by the processor to cause the wireless device to: determine that an emergency call is to be initiated by a user equipment (UE); initiate the emergency call over a non-cellular technology based at least in part on the determination; create an identifier that contains emergency indication information; and, transmit the identifier. The apparatus may include these and other features to carry out the functions described above and further herein.

A non-transitory computer-readable medium is described. The medium may store computer-executable code for communication at a wireless device. The code may be executable by a processor to cause a wireless device to: determine that an emergency call is to be initiated by a user equipment (UE); initiate the emergency call over a non-cellular technology based at least in part on the determination; create an identifier that contains emergency indication information; and transmit the identifier. The code may be executable to cause the wireless device to perform these and other features to carry out the functions described above and further herein.

Another method for wireless communication is described. The method may involve receiving an indication that an emergency call is to be initiated by a user equipment (UE) over a non-cellular technology. The method also may involve providing a list of evolved packet data gateways (ePDGs) for the emergency call based at least in part on the received indication.

Receiving the indication may involve receiving an ePDG fully qualified domain name (FQDN).

The method also may involve receiving location information associated with the UE. In such case, providing the list of ePDGs further may be based on the received location information.

The method also may involve receiving a request to establish a secure internet protocol (IPsec) tunnel for the call via an ePDG from the list. A further indication may be received that the IPsec tunnel is for an emergency session.

The method also may involve providing the requested IPsec tunnel without authenticating the UE.

Providing the list of ePDGs may involve: determining that the UE is roaming based on location or PLMN information for the UE; and, providing an empty list when the UE is roaming. Alternatively or additionally, providing the list of ePDGs may involve providing a list of ePDG addresses and information that identifies a public land mobile network (PLMN) with which each ePDG address is associated.

Another apparatus for wireless communication is described. The apparatus may include: means for receiving an indication that an emergency call is to be initiated by a user equipment (UE) over a non-cellular technology; and, means for providing a list of evolved packet data gateways (ePDGs) for the emergency call based at least in part on the received indication. The apparatus may include these and other features to carry out the functions described above and further herein.

Another apparatus for wireless communication at a wireless device is described. The apparatus may include: a processor; memory in electronic communication with the processor; and, instructions stored in the memory. The instructions may be executable by the processor to cause the wireless device to: receive an indication that an emergency call is to be initiated by a user equipment (UE) over a non-cellular technology; and, provide a list of evolved packet data gateways (ePDGs) for the emergency call based at least in part on the received indication. The apparatus may include these and other features to carry out the functions described above and further herein.

A non-transitory computer-readable medium is described. The medium may store computer-executable code for communication at a wireless device. The code may be executable by a processor to cause a wireless device to: receive an indication that an emergency call is to be initiated by a user equipment (UE) over a non-cellular technology; and, provide a list of evolved packet data gateways (ePDGs) for the emergency call based at least in part on the received indication. The code may be executable to cause the wireless device to perform these and other features to carry out the functions described above and further herein.

The foregoing has outlined rather broadly the features and technical advantages of examples according to the disclosure in order that the detailed description that follows may be better understood. Additional features and advantages will be described hereinafter. The conception and specific examples disclosed may be readily utilized as a basis for modifying or designing other structures for carrying out the same purposes of the present disclosure. Such equivalent constructions do not depart from the scope of the appended claims. Characteristics of the concepts disclosed herein, both their organization and method of operation, together with associated advantages will be better understood from the following description when considered in connection with the accompanying figures. Each of the figures is provided for the purpose of illustration and description only, and not as a definition of the limits of the claims.

### BRIEF DESCRIPTION OF THE DRAWINGS

A further understanding of the nature and advantages of the present invention may be realized by reference to the following drawings. In the appended figures, similar components or features may have the same reference label. Further, various components of the same type may be distinguished by following the reference label by a dash and a second label that distinguishes among the similar components. If only the first reference label is used in the specification, the description is applicable to any one of the similar components having the same first reference label irrespective of the second reference label.
FIG. 1 illustrates an example of a wireless communications system for emergency service, in accordance with various aspects of the present disclosure;
FIG. 2 illustrates an example of a wireless communications system architecture for roaming, in accordance with various aspects of the present disclosure;
FIG. 3 illustrates an example of a process flow for emergency service, in accordance with various aspects of the present disclosure;
FIG. 4 shows a block diagram of an example of a device configured for emergency service, in accordance with various aspects of the present disclosure;
FIG. 5 shows a block diagram of another example of a device configured for emergency service, in accordance with various aspects of the present disclosure;
FIG. 6 shows a block diagram of yet another example of a device configured for emergency service, in accordance with various aspects of the present disclosure;
FIG. 7 shows a block diagram of an example of a wireless communications system including a terminal configured for emergency service, in accordance with various aspects of the present disclosure;
FIG. 8 shows a block diagram of an example of a network device configured for emergency service, in accordance with various aspects of the present disclosure;
FIG. 9 shows a block diagram of another example of a network device configured for emergency service, in accordance with various aspects of the present disclosure;
FIG. 10 shows a block diagram of yet another example of a network device configured for emergency service, in accordance with various aspects of the present disclosure;
FIG. 11 shows a block diagram of an example of a wireless communications system including a network device configured for emergency service, in accordance with various aspects of the present disclosure;
FIG. 12 is a flow chart illustrating an example of a method for emergency service that may be performed by a UE, in accordance with various aspects of the present disclosure;
FIG. 13 is a flow chart illustrating another example of a method for emergency service that may be performed by a UE, in accordance with various aspects of the present disclosure;
FIG. 14 is a flow chart illustrating yet another example of a method for emergency service that may be performed by a UE, in accordance with various aspects of the present disclosure;
FIG. 15 is a flow chart illustrating an example of a method for emergency service that may be performed by a network device, in accordance with various aspects of the present disclosure; and
FIG. 16 is a flow chart illustrating another example of a method for emergency service that may be performed by a network device, in accordance with various aspects of the present disclosure.

### DETAILED DESCRIPTION

The described features generally relate to improved systems, methods, or apparatuses for supporting emergency services. In particular, the features are described in the context of emergency services over WLAN (e.g., Wi-Fi) in 3GPP for the sake of clarity. It should be understood, however, that the described features may be applied to various other radio access technologies as well.

A mobile device, such as a UE, may be attached to *(e.g.,* connected to or associated with) a VPLMN (when roaming) or an HPLMN (when not roaming) of a 3GPP network. In either case, the UE may connect to non-3GPP services, such as WLAN. The WLAN may be trusted or untrusted as well known in the art. In the case of a trusted WLAN, the UE may connect to the WLAN directly via a packet data network (PDN) gateway. For an untrusted WLAN, the UE may connect to the WLAN via the PDN gateway and an ePDG. As noted above, mechanisms for selection of the ePDG and connection to the ePDG for normal (e.g., non-emergency) services is known. However, such conventional mechanisms may be unsuitable for emergency services. Such mechanisms may result in selection of an incorrect or inappropriate ePDG for an emergency service. Further, such mechanisms may result in a UE attempting to place an emergency call when roaming, which may not be supported by the network.

Although some of the mechanisms currently defined for 3GPP and evolved high rate packet data (eHRPD) may be used, at least in part, the mechanisms described herein may provide support for emergency services over WLAN (e.g., Wi-Fi) that is not currently provided. The described mechanisms may involve providing an indication that a call initiated by a UE is an emergency call. Such indication or identification may allow the emergency service to be handled appropriately, as described herein.

Additionally, the described mechanisms may involve providing location information associated with the UE initiating the emergency service. Such location information may allow a network entity to select appropriate or suitable ePDGs from which the UE may select for establishing connectivity. Location information may include, for example, the last PLMN to which the UE was registered or connected, the last known cell (LKC) to which the UE was registered or connected, the medium access control (MAC) address of the WLAN access point being used by the UE for the emergency service, a geo-location of the UE *(e.g.,* GPS coordinates), or the like. Further details regarding the described mechanisms are provided below.

The following description provides examples, and is not limiting of the scope, applicability, or examples set forth in the claims. Changes may be made in the function and arrangement of elements discussed without departing from the scope of the disclosure. Various examples may omit, substitute, or add various procedures or components as appropriate. For instance, the methods described may be performed in an order different from that described, and various steps may be added, omitted, or combined. Also, features described with respect to some examples may be combined in other examples.

As used in the present description and claims, the term "communication session" or "session" refers broadly to a temporary or semi-permanent interactive information exchange between the endpoints or participants (*e.g*., a mobile device and a central server) for the purpose of streaming audio, video, or other media content between the endpoints or participants.

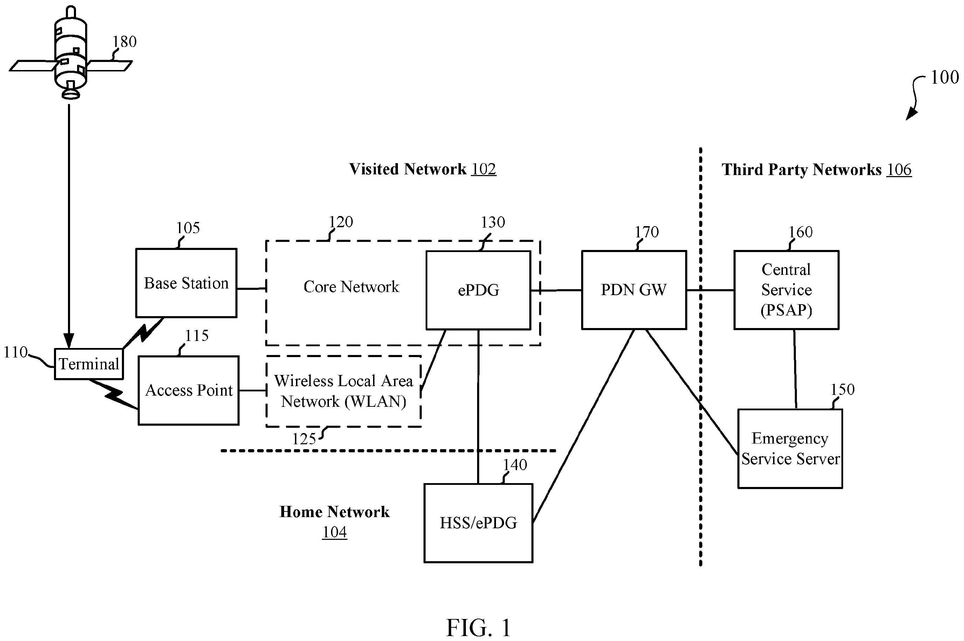

**FIG. 1** illustrates an example of a wireless communications system 100 for emergency service in accordance with various aspects of the present disclosure. Wireless communications system 100 may be used to support emergency service for a terminal 110 *(e.g.,* UE) over Wi-Fi in 3GPP, for example.

The wireless communications system 100 may include a visited network 102, a home network 104, and third party networks 106. The visited network 102 may also be referred to as a VPLMN, a serving network, *etc.* The home network 104 may also be referred to as an HPLMN. For example, the visited network 102 may be a serving network for the terminal 110 when roaming from the home network 104, as illustrated. However, the terminal 110 may be located in the home network 104 when not roaming. That is, the visited network 102 and the home network 104 may be the same network if the terminal 110 is not roaming.

The visited network 102 may include a base station 105, which may be part of an access network (not shown). The base station 105 may connect to terminal 110 via a physical layer wireless connection. The visited network 102 may also include a core network 120, which may be associated with an ePDG 130, and/or other network entities, not shown in FIG. 1 for simplicity. The core network 120 may be a Global System for Mobile Communications (GSM) network, a Wideband Code Division Multiple Access (WCDMA) network, a High Speed Packet Access (HSPA) network, a General Packet Radio Service (GPRS) access network, a Long Term Evolution (LTE) network, a CDMA2000 IX network, an HRPD network, or an Ultra Mobile Broadband (UMB) network, *etc.* WCDMA, HSPA and GPRS are part of Universal Mobile Telecommunication System (UMTS). GSM, WCDMA, HSPA, GPRS, and LTE are described in documents from an organization named "3rd Generation Partnership Project" (3GPP). CDMA2000 1X and HRPD are part of cdma2000, and cdma2000 and UMB are described in documents from an organization named "3rd Generation Partnership Project 2" (3GPP2). The ePDG 130 may perform IP address assignment and IP packet routing functions for packet switched services including transfer of data and establishment of VoIP calls and may also route Short Message Service (SMS) messages. The terminal 110 may also connect to an access point 115, which may be part of a wide area local area network (WLAN) 125. As noted above, the ePDG 130 may be employed for connecting to untrusted accesses (such as an untrusted Wi-Fi hotspot (such as the WLAN 125)).

The home network 104 may include one or more servers which may include the functions of a Home Subscriber Server (HSS)/ePDG 140, and/or other network entities not shown in FIG. 1 for simplicity. A HSS may store subscription information for terminals that have service subscription with the home network 104. In some cases, there may be no home network 104 if terminal 110 is not subscribed to normal communications services - *e.g.,* is restricted to making IMS emergency calls only.

In some examples, the terminal 110 may communicate with a central service 160 *(e.g.,* a Public Safety Answering Point (PSAP)) through an emergency service server 150 and/or a Packet Data Network (PDN) Gateway (GW) 170 using signaling messages transmitted over a communication session for the emergency service. An example of the emergency service server 150 may include an IMS server.

The emergency service server 150 may receive IMS emergency calls initiated by terminals served by the Visited Network 102 (*e.g.* terminal 110) and/or the Home Network 104 and transfer information and/or communication related to these IMS emergency calls to the Central Service 160. The central service 160 may be responsible for answering IMS emergency calls and may also be referred to as an Emergency Center (EC) or a public safety access point (PSAP). The central service 160 may be operated or owned by or on behalf of a government agency, *e.g.,* a county or city. The PDN GW 170 may provide data connectivity including transfer and routing of IP packets and may have access to the Internet or comprise part of the Internet. In some cases, the emergency service server 150 may be a private service operated by or affiliated with an automobile manufacturer. In certain examples, the emergency service server 150 may receive some or all IMS emergency calls from the terminal 110 and forward data or calls to the central service 160 when appropriate.

The terminal 110 may be stationary or mobile and may also be referred to as a mobile station (MS) for GSM and CDMA2000 IX, a UE for WCDMA and LTE, an access terminal (AT) for HRPD, a Secure User Plane Location (SUPL) enabled terminal (SET), a subscriber unit, a station, *etc.* The terminal 110 may be a device such as a cellular phone or other wireless communication device, personal communication system (PCS) device, personal navigation device (PND), Personal Information Manager (PIM), Personal Digital Assistant (PDA), laptop or other suitable mobile device which is capable of receiving wireless communication and/or navigation signals.

Terminal 110 may also include one or more devices which communicate with a PND, such as by short-range wireless, infrared, wireline connection, or other connection - regardless of whether satellite signal reception, assistance data reception, and/or position-related processing occurs at the device or at the PND. Also, the terminal 110 is intended to include all devices, including wireless communication devices, computers, laptops, *etc.* which are capable of communication with a server, such as via the Internet, Wi-Fi, or other network, and regardless of whether satellite signal reception, assistance data reception, and/or position-related processing occurs at the device, at a server, or at another device associated with the network. Any operable combination of the above are also included. The terminal 110 may also be a dedicated In Vehicle System (IVS), which may be permanently attached to (and possibly part of) a vehicle (not shown).

As described further herein, the terminal 110 may be configured to perform emergency services over WLAN. As such, the terminal 110 may implement various mechanisms to support such emergency services. For example, when the terminal 110 initiates an emergency call, the terminal 110 may provide an indication or identification to the network (e.g., the visited network 102 or the home network 104) that the initiated call is an emergency call. Such indication may allow the network to provide one or more suitable ePDGs for the terminal 110 to select for establishing connectivity.

Current mechanisms for ePDG discovery and selection do not take into account whether a call is an emergency call. As such, current mechanisms may result in routing an emergency call to the home network 104 when the terminal 110 is located in the visited network 102. While such routing may be suitable for normal calls, such routing would be unsuitable for an emergency call which may be intended to obtain some sort of emergency help at the current location of the terminal 110. When the terminal 110 provides the indication of an emergency call, the network may provide ePDGs for selection by the terminal 110 that are in the same network in which the terminal 110 is making the emergency call.

Additionally, the terminal 110 may provide some form of location information to the network, which may use the provided location information to identify suitable ePDGs for the terminal 110. For example, an ePDG that is closer to the terminal 110 may provide better connectivity for the emergency call. The terminal 110 may provide a geo-location, for example, as determined via a Satellite Positioning System 180 *(e.g.,* Global Navigation Satellite System (GNSS), Global Positioning System (GPS), Galileo, GLONASS, Beidou, Quasi-Zenith Satellite System (QZSS), Indian Regional Navigational Satellite System (IRNSS), and/or a Satellite Based Augmentation System (SBAS)) to provide a relatively precise location of the terminal 110. Alternatively or additionally, other location information associated with the terminal 110 may be provided.

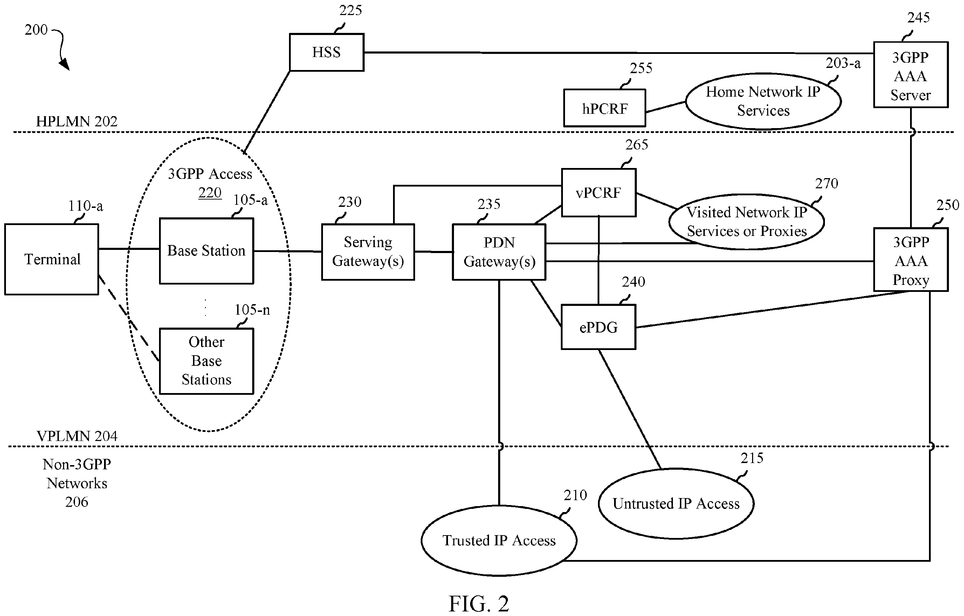

**FIG. 2** illustrates an example of a wireless communications system architecture 200 for roaming, in accordance with various aspects of the disclosure. The wireless communications system architecture 200 may include an HPLMN 202 and a VPLMN 204, which may be examples of aspects of the HPLMN and the VPLMN, respectively, described with reference to FIG. 1. In this example, the HPLMN 202 and the VPLMN 204 may be part of a 3GPP network or system. The wireless communications system architecture 200 also may include non-3GPP networks 206. For example, the non-3GPP networks 206 may include a trusted IP access 210 and an untrusted IP access 215. The IP accesses 210 and 215 may be WLANs (*e.g*., WLAN access points).

A terminal 110-a, which may be an example of aspects of the terminal 110 described with reference to FIG. 1, may be located in the HPLMN 202, or in the VPLMN 204 as shown. The terminal 110-a may establish connectivity with a 3GPP access 220, for example, via one or more base stations 105-a through 105-n of the 3GPP network or system. The terminal 110-a may communicate with an HSS 225 of the HPLMN 202 and/or a serving gateway 230 of the VPLMN 204 via the 3GPP access 220.

As described above, the terminal 110-a may establish connectivity with the trusted IP access 210 via the serving gateway 230 and a PDN gateway 235, in a known manner. However, to establish connectivity with the untrusted IP access 215, the terminal 110-a may connect via the serving gateway 230, the PDN gateway 235 and an ePDG 240.

The HSS 225 may communicate with a 3GPP Authentication Authorization Accounting (AAA) server 245, for authenticating the terminal 110-a, verifying the authorization of the terminal 110-a and accounting for services (*e.g*., talk time, data usage, *etc.)* accessed by the terminal 110-a. Similarly, the PDN gateway 235 and the ePDG 240 may communicate with a 3GPP AAA proxy 250 in the VPLMN 204, which may be in communication with the 3GPP AAA server 245 in the HPLMN 202.

The HPLMN 202 may include a home policy and charging rules function (hPCRF) 255 that, among other known operations, may control access to home network IP services 203-a. Similarly, the VPLMN 204 may include a visited PCRF (vPCRF) 265 (illustrated with connections to the serving gateway 230, the PDN gateway, and the ePDG 240 with the terminal 110-a located in the VPLMN 204) that may control access to visited home network IP services or proxies 270.

When an emergency service is initiated by the terminal 110-a over the untrusted IP access 215 (*e.g.,* a public Wi-Fi hotspot), the connectivity may be established via the ePDG 240 as illustrated. As discussed above, selection of a suitable or appropriate ePDG is important for the emergency service. For example, using conventional mechanisms employed for normal services (*e.g*., non-emergency calls), the HPLMN 202 and/or the VPLMN 204 may provide the terminal with a list of candidate ePDGs for the emergency service. However, because the terminal 110-a is located in the VPLMN 204, the HPLMN 202 may provide unsuitable candidate ePDGs for the emergency service. Thus, the VPLMN 204 should control selection of candidate ePDGs for the list so that the ePDG is located in the VPLMN 204 (where the terminal 110-a) is located.

One approach may be to only allow the terminal 110-a to make an emergency call when not roaming, *e.g*., when the terminal 110-a is located in the HPLMN 202. However, if the terminal 110-a is not connected to a cellular network, *e.g*., the 3GPP network represented by HPLMN 202 and the VPLMN 204 in FIG. 2, the terminal 110-a may not know its roaming status. In such case, the terminal 110-a may still attempt to make an emergency call over WiFi when the terminal 110-a is roaming (*e.g*., located in the VPLMN 204). This situation should be avoided for various reasons *(e.g.,* a user of the terminal 110-a may believe that an emergency call has been placed even though the terminal 110-a cannot make the emergency call). As discussed further herein, one solution is for the terminal 110-a to provide HPLMN information to the network when initiating an emergency call. The HPLMN information may allow the network to determine when the terminal 110-a is roaming. When the network determines that the terminal 110-a is roaming, the network may provide an empty ePDG list to the terminal 110-a, which may indicate that the emergency call cannot be placed. The terminal 110-a may then inform the user of that fact.

Another approach may be to allow the terminal 110-a to make an emergency call even when roaming. As discussed above, mechanisms should be in place that help to ensure that the ePDGs in the list, provided by the network for the terminal 110 to select for establishing connectivity for the emergency call, are useful for the emergency call *(e.g.,* are in the network the terminal 110-a is currently located). The mechanisms described herein may support emergency services for both of these approaches.

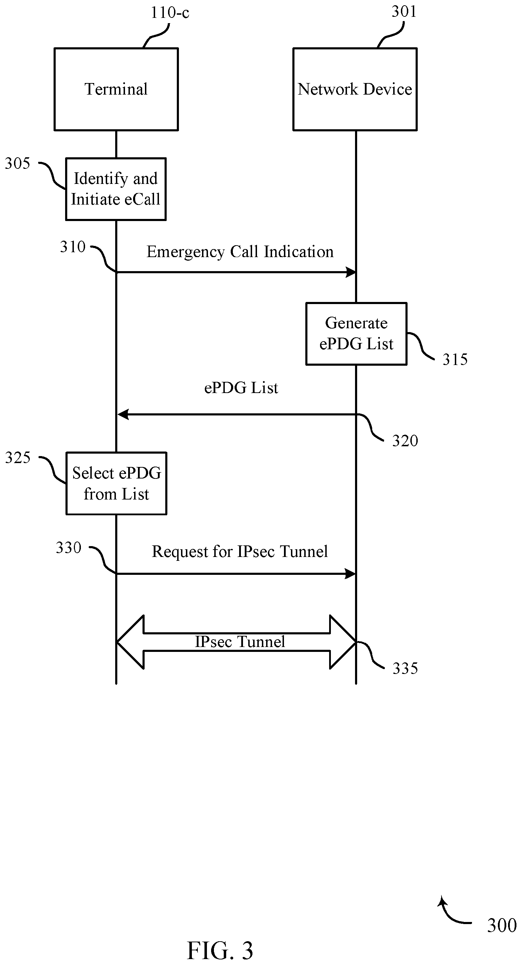

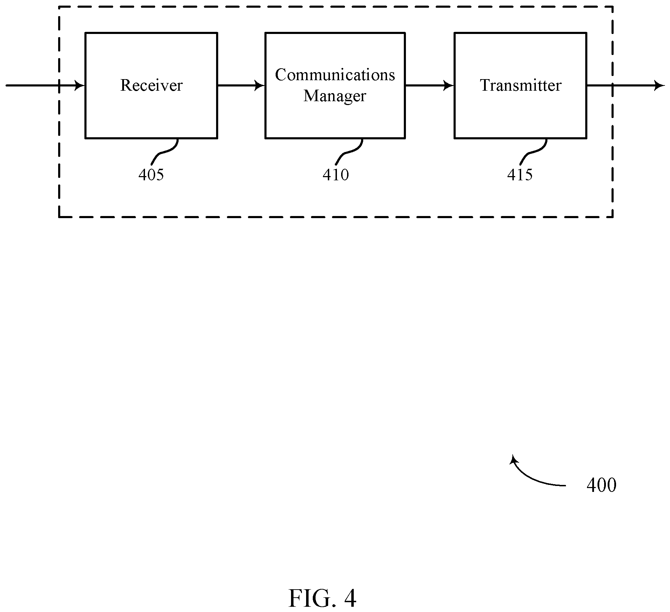

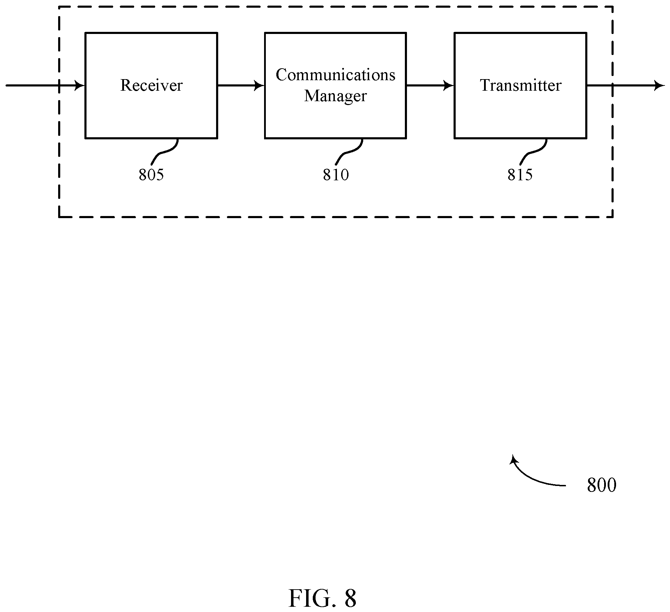

**FIG. 3** illustrates an example of a process flow 300 for emergency service, in accordance with various aspects of the present disclosure. The process flow 300 may include a terminal 110-c and a network device 301. The terminal 110-c may be an example of aspects of the terminals 110 described with reference to FIGs. 1 and 2. The network device 301 may be a base station, for example, such as aspects of the base stations 105 described with reference to FIGs. 1 and 2. Although only the single network device 301 is shown for the sake of simplicity and brevity, the network device 301 may include multiple devices. For example, one network device may perform certain operations, and another network device *(e.g.,* a base station) may communicate with the terminal 110-c based at least in part on such operations. Additional details regarding the actions of the terminal 110-c are described below with respect to FIGs. 4-7 and 12-14. Additional details regarding the actions of the network device 301 are described below with respect to FIGs. 8-11 and 15-16.

At block 305, the terminal 110-c may identify or otherwise determine that an emergency service is to be initiated by the terminal 110-c *(e.g.,* in response to user input, upon occurrence of an event, *etc.).*

At 310, the terminal may provide an emergency call indication associated with the network service to the network device 301. In the case of trusted access, this may be transmitted as part of an EAP authentication between the terminal and the network device 301. Additionally and alternatively, in case of trusted access, this may be transmitted as part of a WLAN Control Protocol (WLCP) request for connectivity between the terminal and the network device 301. In the case of untrusted access, the terminal may transmit a request for a list of ePDGs including an FQDN. The request for a list of ePDGs may be a DNS request containing the FQDN. The indication may inform the network device 301 that a call initiated by the terminal 110-c is an emergency call.

The remainder of the operations and communications shown in FIG. 3 (block 315 onward) may apply only for the untrusted case. At block 315, the network device 301 may generate a list of ePDGs based at least in part on the received indication. Upon receiving an indication of emergency call in the ePDGs request, the network device 301 may include in the list only ePDGs that may be useful for the emergency call. For example, the network device 301 may include only ePDGs that support emergency services and/or only ePDGs that are located in the network (*e.g*., HPLMN or VPLMN) in which the terminal 110-c is currently located. For example, the network device 301 may include for each ePDG an indication of in which PLMN the ePDG is located. Then, at 320, the network device 301 may transmit or otherwise provide the ePDG list to the terminal 110-c. Upon receiving an indication of emergency call in the ePDGs request, the network device 301 may not forward the request to a different network even if the FQDN provided includes a PLMN of a different network, and instead provides a list of ePDGs that are located in the network (e.g., HPLMN or VPLMN) in which the terminal 110-c is currently located.

At block 325, the terminal 110-c may select an ePDG from the provided list. For example, the terminal 110-c may select the first ePDG in the list (and may proceed through the list in order until successful connectivity with a selected ePDG is achieved). The ePDGs in the list may be ordered by the network device 301, for example, based on proximity of each ePDG to the terminal 110-c, performance and/or reliability of each ePDG, and/or any other suitable factors. Alternatively, such information may be provided along with the list of ePDGs so that the terminal 110-c may make a selection from the list based upon such factors. For example, the terminal 110-c may select an ePDG by comparing the current VPLMN with the PLMN each ePDG is located in, when received from the network, and select only ePDGs located in the VPLMN

Once an ePDG is selected, the terminal 110-c may transmit a request to establish connectivity (*e.g*., a secure IP tunnel (IPsec)) via the selected ePDG at 330. The terminal 110-c may include an emergency call indication in the request at 330. Then, at 335, an IPsec tunnel may be established for the selected ePDG.

The terminal 110-c also may transmit or otherwise provide (e.g., along with the request) an additional indication that the requested connectivity is for an emergency service *(e.g.,* an emergency call) in the request for the tunnel establishment. This may be achieved during an IKEv2 authentication and tunnel establishment. In one embodiment, in addition to the values of Initial Attach and Handover Attach that the terminal 110-c may provide as Attach Type, the terminal 110-c may also provide "Emergency Initial Attach" and "Emergency Handover Attach." In another embodiment, the terminal 110-c may provide a separate indication describing the type of connectivity requested. For example, if the terminal 110-c desires to establish connectivity for an emergency session, then the terminal 110-c may provide a Service Type set to "emergency." This additional indication may allow the network device 301 to proceed to provide the requested connectivity without authenticating the terminal 110-c (*e.g*., without determining whether the terminal 110-c is authorized to access the services). Such an approach may allow terminals that are invalid (or untrusted) to make IMS emergency calls without requiring authentication or verification.

As used herein, a terminal may be considered to be invalid if the terminal cannot be authenticated (*e.g*., the terminal does not have a valid international mobile subscriber identity (IMSI) (*e.g.,* does not have a valid subscription to a network), or does not have an IMSI at all (e*.g.,* is not subscribed to any network)). A terminal also may be considered to be invalid if the terminal is not authorized for service (*e.g*., packet switched service) at a current location of the terminal.

**FIG. 4** shows a block diagram of a wireless device 400 configured for emergency service, in accordance with various aspects of the present disclosure. The wireless device 400 may be an example of aspects of the terminals 110 described with reference to FIGs. 1-3. The wireless device 400 may include a receiver 405, a communications manager 410, and a transmitter 415. The wireless device 400 also may include a processor. Each of these components may be in communication with each other.

The components of the wireless device 400 (as well as those of related devices described herein) may, individually or collectively, be implemented with at least one application specific integrated circuit (ASIC) adapted to perform some or all of the applicable functions in hardware. Alternatively, the functions may be performed by one or more other processing units (or cores), on at least one IC. Other types of integrated circuits may be used (*e.g*., Structured/Platform ASICs, a field programmable gate array (FPGA), or another semi-custom IC), which may be programmed in any manner known in the art. The functions of each unit may also be implemented, in whole or in part, with instructions embodied in a memory, formatted to be executed by one or more general or application-specific processors.

The receiver 405 may receive information such as packets, user data, or control information associated with various information channels (*e.g*., control channels, data channels, and information related to emergency services, *etc.).* Information may be passed on to the communications manager 410, and to other components of wireless device 400. For example, the receiver 405 may receive a list of candidate ePDGs from the network for an emergency service, as well as data sent to the wireless device 400 as part of the emergency service.

The communications manager 410 may control or otherwise facilitate communications, including but not limited to IMS emergency calls, for the wireless device 400 using the receiver 405 and the transmitter 415. With regard to IMS emergency calls, the communications manager 410 may determine when an emergency call is to be initiated by the wireless device 400, initiate the call, generate or otherwise provide the emergency call indication, select from the ePDG list provided from the network, request connectivity for the emergency call, generate or otherwise provide the additional indication that the requested connectivity is for an emergency call, establish such connectivity (*e.g*., in conjunction with the network) for an emergency communication session, and facilitate data exchange via the emergency communication session.

The transmitter 415 may transmit signals received from other components of the wireless device 400. For example, the transmitter 415 may transmit a message to initiate an emergency call, the emergency call indication, the connectivity request, the additional indication, and data for the emergency call. In some instances, the transmitter 415 may be collocated with the receiver 405 in a transceiver. The transmitter 415 may include a single antenna, or a plurality of antennas.

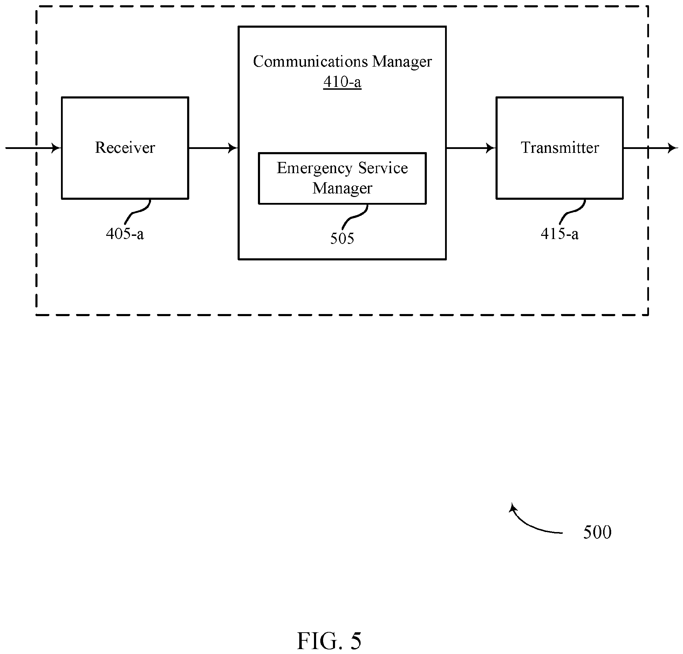

**FIG. 5** shows a block diagram of another example of a wireless device 500 configured for emergency service, in accordance with various aspects of the present disclosure. The wireless device 500 may be an example of aspects of the terminals 110 described with reference to FIGs. 1-3 and/or the wireless device 400 described with reference to FIG. 4. The wireless device 500 may include a receiver 405-a, a communications manager 410-a, and a transmitter 415-a. The wireless device 500 also may include a processor. Each of these components may be in communication with each other.

The receiver 405-a and the transmitter 415-a may perform the corresponding operations described with reference to Fig. 4. The communications manager 410-a also may perform the corresponding operations described above with reference to FIG. 4.

Either separately or as part of the communications manager 410-a as shown, the wireless device 500 may include an emergency service manager 505. As a subcomponent of the communications manager 410-a or as a separate component, the emergency service manager 505 may control or otherwise facilitate operations that are specific to the wireless device making an emergency call. Thus, the communications manager 410-a may be configured in a conventional manner to handle aspects for non-emergency communications. The emergency service manager 505 may coordinate with or otherwise use the communications manager 410-a for operations that are common to both emergency communications and non-emergency communications.

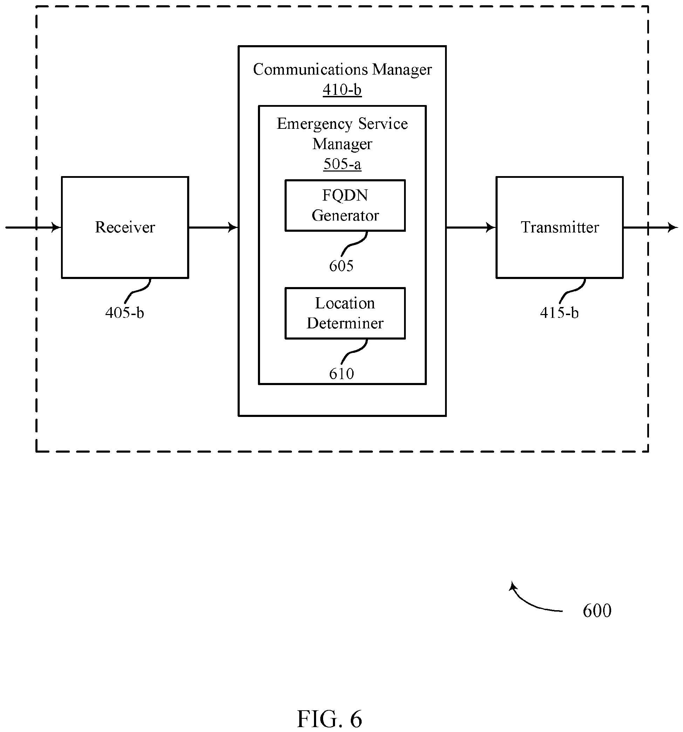

**FIG. 6** shows a block diagram of another example of a wireless device 600 configured for emergency service, in accordance with various aspects of the present disclosure. The wireless device 600 may be an example of aspects of the terminals 110 described with reference to FIGs. 1-3 and/or the wireless devices 400, 500 described with reference to FIGs. 4 and 5. The wireless device 600 may include a receiver 405-b, a communications manager 410-b, and a transmitter 415-b. The wireless device 600 also may include a processor. Each of these components may be in communication with each other.

The receiver 405-b and the transmitter 415-b may perform the corresponding operations described with reference to Fig. 4. The communications manager 410-b also may perform the corresponding operations described above with reference to FIG. 4.

Either separately or as part of the communications manager 410-b as shown, the wireless device 600 may include an emergency service manager 505-a, which may control or otherwise facilitate operations that are specific to the wireless device making an emergency call and coordinate with the communications manager 410-b for other operations, such as described with reference to FIG 5.

The emergency service manager 505-a may include an FQDN generator 605 and a location determiner 610. The FQDN generator 605 may generate an FQDN for a DNS query that the wireless device 600 transmits (via the transmitter 415-b) to the network for discovery of ePDGs for an emergency call. The FQDN generated by the FQDN generator 605 may be similar in format to the conventional FQDN used for conventional DNS queries. As such, the FQDN generator 605 may be an existing component of the wireless device 600 that is modified to incorporate additional information into the conventional FQDN (described above).

For example, the FQDN generator 605 may generate an ePDG FQDN for an emergency call that includes additional information such as an indication that the initiated call is an emergency call (*e.g.,* for emergency services). A conventional ePDG FQDN may be in the form of "epdg.epc.mnc<MNC>.mcc<MCC>.pub.3gppnetwork.org" where MNC is three (3) digits of the Mobile Network Code for an attached or selected PLMN and MCC is three (3) digits of the Mobile Country Code for the attached or selected PLMN. The ePDG FQDN generated for an emergency service may include the indication "emergency" as a label in front of the "pub.3gppnetwork.org" labels. As such, the FQDN generator 605 may generate an ePDG FQDN for an emergency call in the form of "XXXXXXX.emergency.pub.3gppnetwork.org" where XXXXXXX represents the other conventional labels. Alternatively, the ePDG FQDN generated for an emergency call may include the indication "emergency" as a label in front of the "epdg.epc" labels. As such, the FQDN generator 605 may generate an ePDG FQDN for an emergency call in the form of "emergency.epdg.epc.XXXXXXX" where XXXXXXX represents the other conventional labels.

The location determiner 610 determines or otherwise obtains various location information associated with the wireless device 600. The location determiner 610 may provide such location information to the FQDN generator 605, which may include the location information in the FQDN *(e.g.,* ePDG FQDN) generated for an emergency call.

For example, when the wireless device 600 is not connected to a cellular network, the location determiner 610 may provide the last PLMN *(e.g.,* the last registered PLMN (RPLMN)) to which the wireless device 600 was connected, if known, to the FQDN generator 605 for inclusion in the ePDG FQDN in the fields reserved for the attached or selected PLMN. The location determiner 610 may provide the last known PLMN to the FQDN generator 605 unless such information is determined by the location determiner 610 to be stale. The location determiner 610 may determine the last known PLMN to be stale, for example, if the wireless device 600 has performed a power cycle *(e.g.,* turned off and back on) after the wireless device 600 was connected to that PLMN, or if a certain amount of time has elapsed since the wireless device 600 disconnected from that PLMN *(e.g.,* a PLMN timer has expired).

Alternatively or additionally, when the wireless device 600 is not connected to a cellular network, the location determiner 610 may provide the last known cell (LKC) (*e.g.,* the last registered cell) to which the wireless device 600 was connected to the FQDN generator 605 for inclusion in the ePDG FQDN. The location determiner 610 may provide the LKC to the FQDN generator 605 unless such information is determined by the location determiner 610 to be stale. The location determiner 610 may determine the LKC to be stale, for example, if the wireless device 600 has performed a power cycle *(e.g.,* turned off and back on) after the wireless device 600 was connected to that cell, or if a certain amount of time has elapsed since the wireless device 600 disconnected from that cell *(e.g.,* a LKC timer has expired).

Alternatively or additionally, the location determiner 610 may provide the MAC address of the WLAN AP being accessed by the wireless device 600, if known, to the FQDN generator 605 for inclusion in the ePDG FQDN. The MAC address of the WLAN AP may be provided to the wireless device 600, for example, in an AP beacon or as part of an association procedure.

Alternatively or additionally, the location determiner 610 may provide a current (or last known if not stale) geo-location (*e.g*., GPS coordinates) of the wireless device 600 to the FQDN generator 605 for inclusion in the ePDG FQDN. For example, the location determiner 610 may include, or otherwise be in communication with, a GPS component of the wireless device 600.

The FQDN generator 605 may also fill in the conventional PLMN field in the ePDG FQDN for an emergency service. For example, if the wireless device 600 is roaming and knows the RPLMN (whether or not the wireless device 600 is connected to cellular, *e.g.,* for different prioritizations of cellular (LTE, 3GPP, 2G, *etc.)* and WLAN), the FQDN generator 605 may provide the RPLMN in the PLMN field (unless stale, as discussed above). If the wireless device 600 knows it is roaming but is not connected to any PLMN, the FQDN generator 605 may provide the last known PLMN in the PLMN field (unless stale, as discussed above, in which case a null or zero or wildcard value may be provided in the PLMN field). Further, if the wireless device 600 is not attached to any PLMN, the wireless device 600 may not perform PLMN selection (*e.g*., using conventional mechanisms for EPC network selection) and the FQDN generator 605 may provide a null or zero or wildcard value in the PLMN field. Not performing PLMN selection may save time in the process of establishing connectivity, which may be important when emergency services are desired.

The FQDN generator 605 also may add information to the FQDN *(e.g.,* ePDG FQDN) that allows the network to determine whether the wireless device 600 is roaming. The wireless device 600 may know its HPLMN *(e.g.,* from a subscriber identity module (SIM) or a user identity module (UIM)). Thus, the FQDN generator 605 may access such information and provide the HPLMN in the ePDG FQDN. For example, the HPLMN may be provided by an "HPLMN" label followed by the HPLMN identity (e.g., in the form of "mnc<MNC>.mcc<MCC>"). For example, the ePDG FQDN may be in the form of "epdg.epc.(... ).hplmn.hplmnmnc<MCC>.hplmnmcc<MCC>.pub.3gppnetwork.org" where ( ... ) represents other information, such as the emergency service indication ("emergency" label), location information, and the PLMN field. If the network does not allow roaming devices to make IMS emergency calls, knowing that the call is an emergency call (from the "emergency" indication included in the ePDG FQDN) and determining the wireless device 600 to be roaming (from the HPLMN included in the ePDG FQDN), the network may return an empty list of ePDGs in response to the DNS query. Thus, routing an emergency call to the HPLMN when the wireless device 600 is roaming may be avoided.

Various approaches may be considered for implementation of the ePDG discovery described above. For example, one approach may be to generate the ePDG FQDN for an emergency service (such as described above) even if the wireless device requesting the emergency service is already connected to an ePDG for other communications. The wireless device may disconnect from the current ePDG and reconnect to an ePDG selected from the resulting list of ePDGs for establishing the emergency session, even if the ePDG remains the same. Alternatively, if the current ePDG is included in the resulting list of ePDGs, the wireless device may establish the emergency session via the current ePDG, without disconnecting, selecting and reconnecting.

A second approach may be to verify whether an ePDG to which the wireless device is already connected was selected by performing a DNS query with the RPLMN included in the FQDN, thereby verifying whether the current ePDG is local (*e.g*., suitable for the emergency service). If the current ePDG is local, the wireless device may use the current ePDG for the emergency call. If the current ePDG is not local, or if the connectivity for the emergency service using the current ePDG fails, the wireless device may perform the ePDG discovery for the emergency service as described above.

A third approach may be to use information gained through ePDG discovery for normal (*e.g*., non-emergency) sessions. When the network returns the list of ePDGs, the network may indicate whether each ePDG in the list may support emergency services, and also may indicate restrictions for each ePDG regarding what location(s) or area(s) the ePDG may provide emergency services. The location(s)/area(s) may be indicated as a list of cellular cells or tracking areas, or a list of WLAN identifiers (*e.g*., service set identifiers (SSIDs)). When the wireless device is connected to one of the ePDGs and is to establish an emergency session, the wireless device may verify whether the current ePDG supports emergency services and whether the current ePDG has associated restrictions for providing emergency services. If the current ePDG does not support emergency sessions or if any restrictions apply, the ePDG discovery for emergency services described above may be used. Otherwise, the wireless device may use the current ePDG for the emergency session.

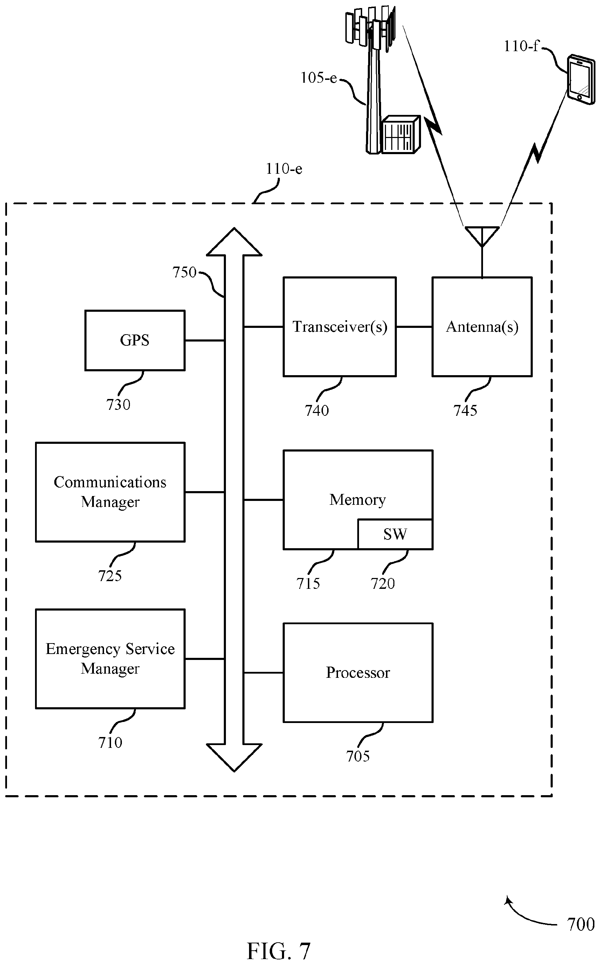

**FIG. 7** shows a block diagram of an example of a wireless communications system 700 including a terminal 110-e configured for emergency service, in accordance with various aspects of the present disclosure. The terminal 110-e may be an example of aspects of the terminal 110 described with reference to FIGs. 1-3, or the wireless devices 400, 500, 600 described with reference to FIGs. 4-6. The terminal 110-e may include a communications manager 725, which may be an example of aspects of the communications managers 410 described with reference to FIGs. 4-6. The terminal 110-e also may include an emergency service manager 710, which may be an example of aspects of the emergency service managers 505 described with reference to FIGs. 5 and 6.

The terminal 110-e may include a processor 705, memory 715 (including software (SW) 720), a transceiver(s) 740 and an antenna(s) 745, each of which may communicate, directly or indirectly, with one another (*e.g*., via a bus(es) 750). The transceiver(s) 740 may communicate bi-directionally, via the antenna(s) 745 or wired or wireless links, with one or more networks, as described above. For example, the transceiver(s) 740 may communicate bi-directionally with a base station 105-e (and thus, to a wireless network) or with a different terminal 110-f. The transceiver(s) 740 may include a modem to modulate the packets and provide the modulated packets to the antenna(s) 745 for transmission, and to demodulate packets received from the antenna(s) 745. While the terminal 110-e may include a single antenna 745, the terminal 110-e may also have multiple antennas 745 capable of concurrently transmitting or receiving multiple wireless transmissions.

The memory 715 may include random access memory (RAM) and read only memory (ROM). The memory 715 may store computer-readable, computer-executable software/firmware code 720 including instructions that, when executed, cause the processor 705 to perform various functions described herein (*e.g*., emergency service, ePDG discovery for emergency service, ePDG FQDN generation and analysis, location analysis, *etc.*)*.* Alternatively, the software/firmware code 720 may not be directly executable by the processor 705 but cause a computer (*e.g*., when compiled and executed) to perform functions described herein. The processor 705 may include an intelligent hardware device, *(e.g.,* a central processing unit (CPU), a microcontroller, an ASIC, *etc.).*

The terminal 110-e also may include a GPS 730, which may be employed to determine location information (e.g., geo-location in terms of GPS coordinates) of the terminal 110-e. The terminal 110-e may provide such location information to the network, as described above.

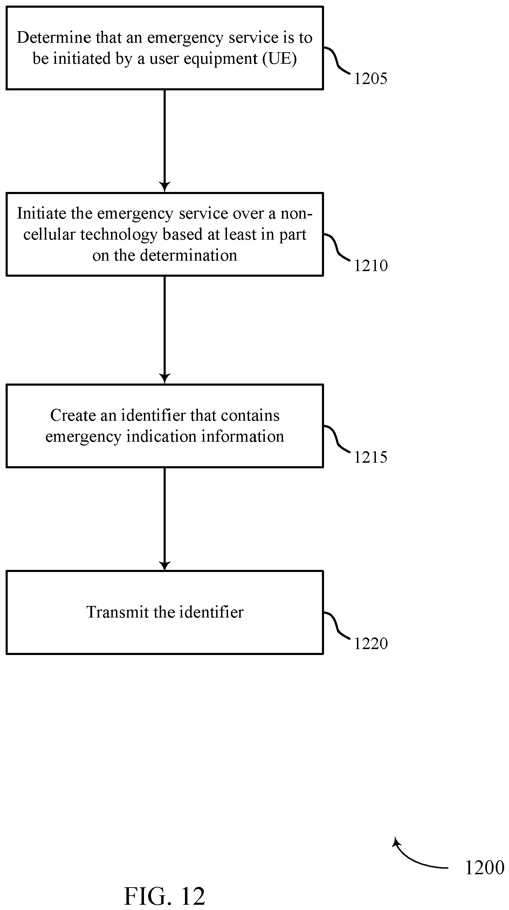

The components of the terminal 110-e may be configured to implement aspects discussed above with respect FIGs. 1-6, and those aspects may not be repeated here for the sake of brevity. Moreover, the components of terminal 110-e may be configured to implement aspects discussed below with respect to FIGs. 12-14, and those aspects may not be repeated here also for the sake of brevity.

**FIG. 8** shows a block diagram of an example of a network device 800 configured for emergency service, in accordance with various aspects of the present disclosure. The network device 800 may be an example of aspects of the base stations 105 described with reference to FIGs. 1 and 2, or aspects of the network device 301 described with reference to FIG. 3. In some instances, the network device 800 may be a combination of multiple network devices. The network device 800 may include a receiver 805, a communications manager 810, and a transmitter 815. The network device 800 also may include a processor. Each of these components may be in communication with each other.

The components of the network device 800 (as well as those of related devices described herein) may, individually or collectively, be implemented with at least one application specific integrated circuit (ASIC) adapted to perform some or all of the applicable functions in hardware. Alternatively, the functions may be performed by one or more other processing units (or cores), on at least one IC. Other types of integrated circuits may be used (e.g., Structured/Platform ASICs, a field programmable gate array (FPGA), or another semi-custom IC), which may be programmed in any manner known in the art. The functions of each unit may also be implemented, in whole or in part, with instructions embodied in a memory, formatted to be executed by one or more general or application-specific processors.

The receiver 805 may receive information such as packets, user data, or control information associated with various information channels (*e.g*., control channels, data channels, and information related to emergency service, *etc.).* Information may be passed on to the communications manager 810, and to other components of network device 800. For example, the receiver 805 may receive an indication that a call initiated by a wireless device is an emergency call, location information associated with the wireless device, and other information (*e.g.,* RPLMN, HPLMN, *etc.*)*,* all of which may be part of an FQDN (*e.g.,* ePDG FQDN) for the emergency call as part of a DNS query received from the wireless device. The receiver 805 also may receive an additional indication from the wireless device that a request for connectivity (*e.g.*, IPsec tunnel) via a selected ePDG is for an emergency session.

The communications manager 810 may control or otherwise facilitate communications, including but not limited to IMS emergency calls, for wireless devices connected or otherwise associated with the network using the receiver 805 and the transmitter 815. With regard to IMS emergency calls, the communications manager 810 may process *(e.g.,* parse) the ePDG FQDN received from a wireless device, generate or otherwise obtain a list of candidate ePDGs for the wireless device, and facilitate establishment of connectivity for the wireless device via an ePDG selected by the wireless device from the ePDG list for an emergency session. The communications manager 810 also may determine if the wireless device is roaming.

The transmitter 815 may transmit signals received from other components of the network device 800. For example, the transmitter 815 may transmit the list of ePDGs to a wireless device for making an emergency call. In some instances, the transmitter 815 may be collocated with the receiver 805 in a transceiver. The transmitter 815 may include a single antenna, or a plurality of antennas.

The network device 800 also may be configured to stop a wireless device that is roaming from making an emergency call, for example, if the network supports IMS emergency calls over WLAN only for wireless devices that are not roaming. As described above, the network device 800 may use the "emergency" indication provided by a wireless device to determine that the wireless is initiating an emergency call and may use the HPLMN provided by the wireless device to determine whether the wireless device is roaming (e.g., by comparing the HPLMN to the current network location of the wireless device). Also, the network device 800 (either alone or in conjunction with a DNS server, not shown) may provide an empty list of ePDGs to the wireless device to indicate that the wireless device is not allowed to make the emergency call.

Alternatively, the network device 800 may provide the list of ePDGs along with indications of the PLMN to which each of the ePDGs belong. The wireless device may compare its HPLMN with the PLMN of each candidate ePDG. When the PLMNs of the candidate ePDGs differ from the HPLMN of the wireless device the wireless device may be considered to be roaming, and the wireless device may not proceed with the emergency call. If the emergency indication is provided by the wireless device, the network device 800 may use the location information provided by the wireless device to select one or more candidate ePDGs for the wireless device.

The network device 800 also may be configured to process a DNS request locally when the FQDN contains the emergency indication. Upon receiving a DNS query with an FQDN containing the emergency indication, the network device 800 may intercept a DNS query and respond to the query independently of the provided PLMN in the DNS query, instead of routing the query based on the provided PLMN, and provide a response to the wireless device.

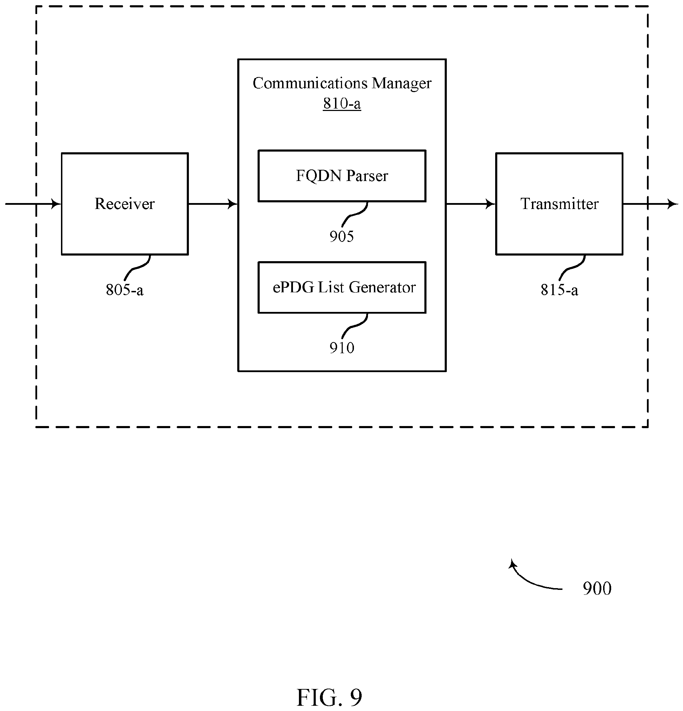

**FIG. 9** shows a block diagram of another example of a network device 900 configured for emergency service, in accordance with various aspects of the present disclosure. The network device 900 may be an example of aspects of the base stations 105 described with reference to FIGs. 1 and 2, or aspects of the network devices 301, 800 described with reference to FIGs. 3 and 8. The network device 900 may include a receiver 805-a, a communications manager 810-a, and a transmitter 815-a. The network device 900 also may include a processor. Each of these components may be in communication with each other.

The components of the network device 900 may, individually or collectively, be implemented with at least one application specific integrated circuit (ASIC) adapted to perform some or all of the applicable functions in hardware. Alternatively, the functions may be performed by one or more other processing units (or cores), on at least one IC. Other types of integrated circuits may be used (*e.g*., Structured/Platform ASICs, a field programmable gate array (FPGA), or another semi-custom IC), which may be programmed in any manner known in the art. The functions of each unit may also be implemented, in whole or in part, with instructions embodied in a memory, formatted to be executed by one or more general or application-specific processors.

The receiver 805-a and the transmitter 815-a may perform the corresponding operations described with reference to Fig. 8. The communications manager 810-a also may perform the corresponding operations described above with reference to FIG. 8.

Either separately or as part of the communications manager 810-a as shown, the network device 900 may include an FQDN parser 905 and an ePDG list generator 910. The FQDN parser 905 may handle the ePDG FQDN received from a wireless device initiating an emergency call. The FQDN parser 905 may "read" the ePDG FQDN from right to left and identify the information provided for the various fields/labels such as described herein. The ePDG list generator 910 may receive various information from the FQDN parser 905 based on the received ePDG FQDN and use such information to determine suitable ePDGs for the initiated emergency call.

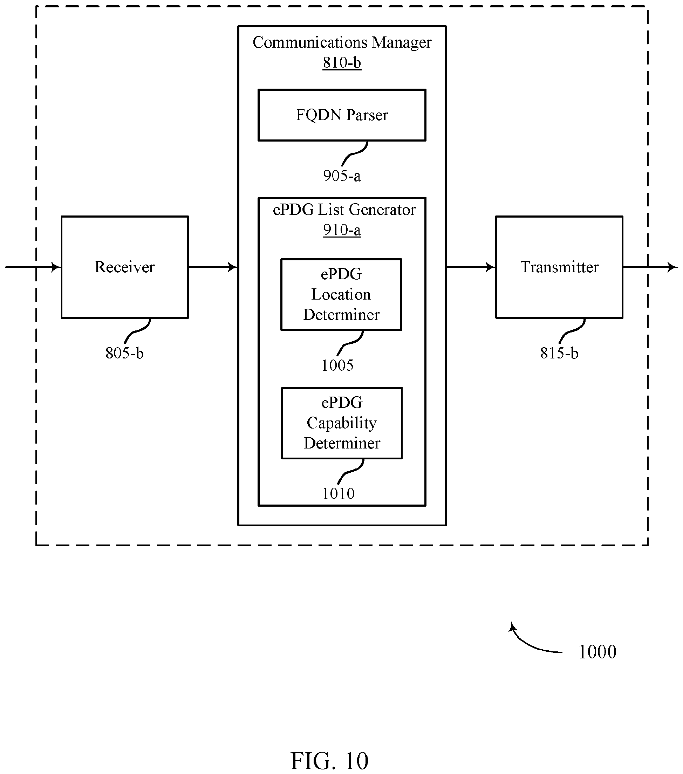

**FIG. 10** shows a block diagram of yet another example of a network device 1000 configured for emergency service, in accordance with various aspects of the present disclosure. The network device 1000 may be an example of aspects of the base stations 105 described with reference to FIGs. 1 and 2, or aspects of the network devices 301, 800, 900 described with reference to FIGs. 3, 8 and 9. The network device 1000 may include a receiver 805-b, a communications manager 810-b, and a transmitter 815-b. The network device 1000 also may include a processor. Each of these components may be in communication with each other.

The components of the network device 1000 (as well as those of related devices described herein) may, individually or collectively, be implemented with at least one application specific integrated circuit (ASIC) adapted to perform some or all of the applicable functions in hardware. Alternatively, the functions may be performed by one or more other processing units (or cores), on at least one IC. Other types of integrated circuits may be used (e.g., Structured/Platform ASICs, a field programmable gate array (FPGA), or another semi-custom IC), which may be programmed in any manner known in the art. The functions of each unit may also be implemented, in whole or in part, with instructions embodied in a memory, formatted to be executed by one or more general or application-specific processors.

The receiver 805-b and the transmitter 815-b may perform the corresponding operations described with reference to Fig. 8. The communications manager 810-a also may perform the corresponding operations described above with reference to FIG. 8.

Either separately or as part of the communications manager 810-b as shown, the network device 1000 may include an FQDN parser 905-a and an ePDG list generator 910-a, which may perform the corresponding operations described with reference to Fig. 9.

The ePDG list generator 910-a may include an ePDG location determiner 1005, which may determine the PLMN associated with each candidate ePDG of the generated list. Alternatively or additionally, the ePDG location determiner 1005 may determine geo-location information for each candidate ePDG. Such information may be included with the list, and used by the wireless device to select one or more of the candidate ePDGs (as needed) to establish connectivity for an emergency session. For example, the wireless device may begin by selecting a candidate ePDG that has a geo-location that is closest to the current geo-location of the wireless device, and may proceed accordingly by selecting a next candidate ePDG until connectivity is established.

The ePDG list generator 910-a may include an ePDG capability determiner 1010, which may determine whether ePDGs are capable of supporting an emergency call. The ePDG capability determiner 1010 may ensure that only ePDGs capable of supporting emergency services are included in the ePDG list provided by the network device 1000 in response to the initiation of an emergency call by a wireless device. Alternatively or additionally, the ePDG capability determiner 1010 may assess and report the capabilities of the candidate ePDGs provided in response to the initiation of a non-emergency call by a wireless device. Alternatively or additionally, the ePDG list generator 910-a is provided with a pre-configured list of ePDGs that are capable of supporting the call.

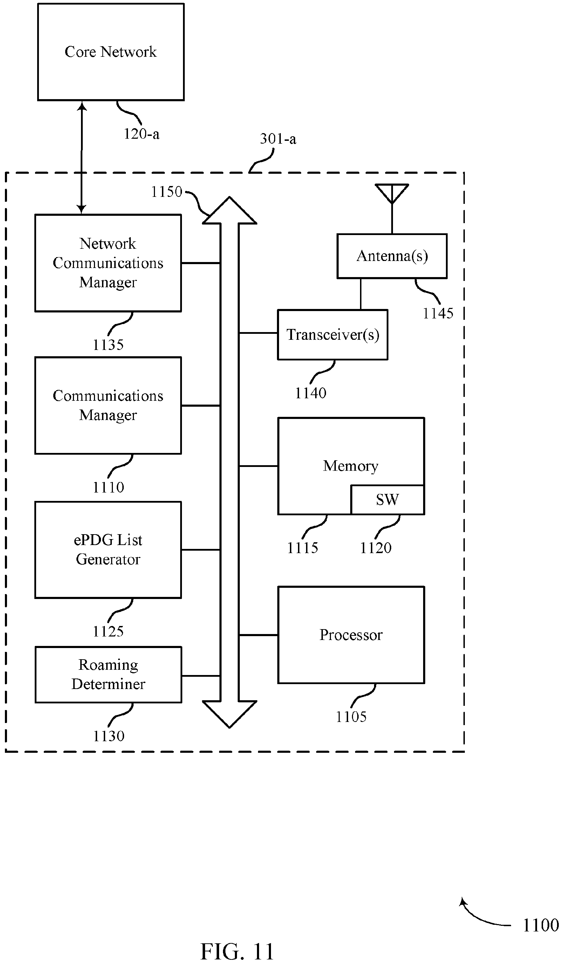

**FIG. 11** shows a block diagram of an example of a wireless communications system 1100 including a network device 301-a configured for emergency service, in accordance with various aspects of the present disclosure. The network device 301-a may be an example of aspects of the base stations 105 described with reference to FIGs. 1 and 2, or the network devices 301, 800, 900, 1000 described with reference to FIGs. 3 and 8-10. The network device 301-a may include a communications manager 1110, which may be an example of aspects of the communications managers 810 described with reference to FIGs. 8-10. The network device 301-a also may include an ePDG list generator 1125, which may be an example of aspects of the ePDG list generators 910 described with reference to FIGs. 9 and 10.

The network device 301-a may include a processor 1105, memory 1115 (including software (SW) 1120), a transceiver(s) 1140 and an antenna(s) 1145, each of which may communicate, directly or indirectly, with one another (e.g., via a bus(es) 1150). The transceiver(s) 1140 may communicate bi-directionally, via the antenna(s) 1145 or wired or wireless links, with one or more networks, as described above. For example, the transceiver(s) 740 may communicate bi-directionally a wireless network, wireless devices, and other base stations (not shown). The transceiver(s) 1140 may include a modem to modulate the packets and provide the modulated packets to the antenna(s) 1145 for transmission, and to demodulate packets received from the antenna(s) 1145. While the network device 301-a may include a single antenna 1145, the network device 301-a may also have multiple antennas 1145 capable of concurrently transmitting or receiving multiple wireless transmissions.

The memory 1115 may include random access memory (RAM) and read only memory (ROM). The memory 1115 may store computer-readable, computer-executable software/firmware code 1120 including instructions that, when executed, cause the processor 1105 to perform various functions described herein (*e.g*., emergency service support, ePDG list provision, *etc.).* Alternatively, the software/firmware code 1120 may not be directly executable by the processor 1105 but cause a computer (e.g., when compiled and executed) to perform functions described herein. The processor 1105 may include an intelligent hardware device, *(e.g.,* a central processing unit (CPU), a microcontroller, an ASIC, *etc.).*

The network device 301-a may include a network communications manager 1135, which may facilitate communications between the network device 301-a and a core network 120-a, as well as other components of the network.

The network device 301-a may include a roaming determiner 1130, which may determine whether a wireless device initiating emergency services is roaming or not. The roaming determiner 1130 may operate in any suitable manner, such as described above, for making such a determination.

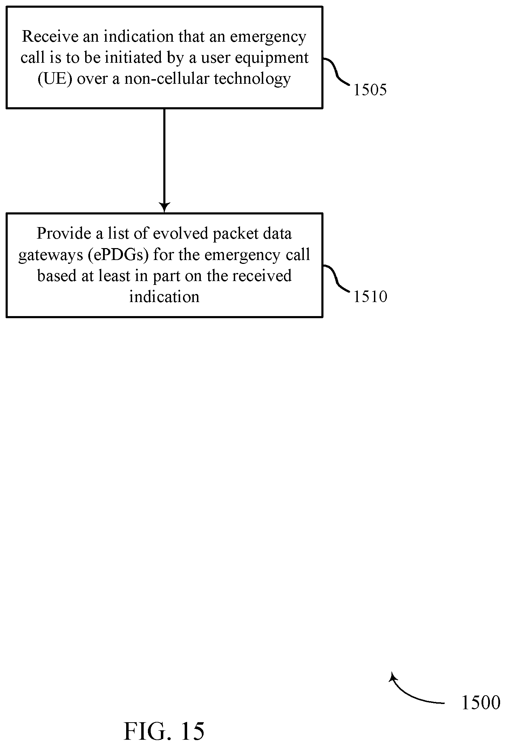

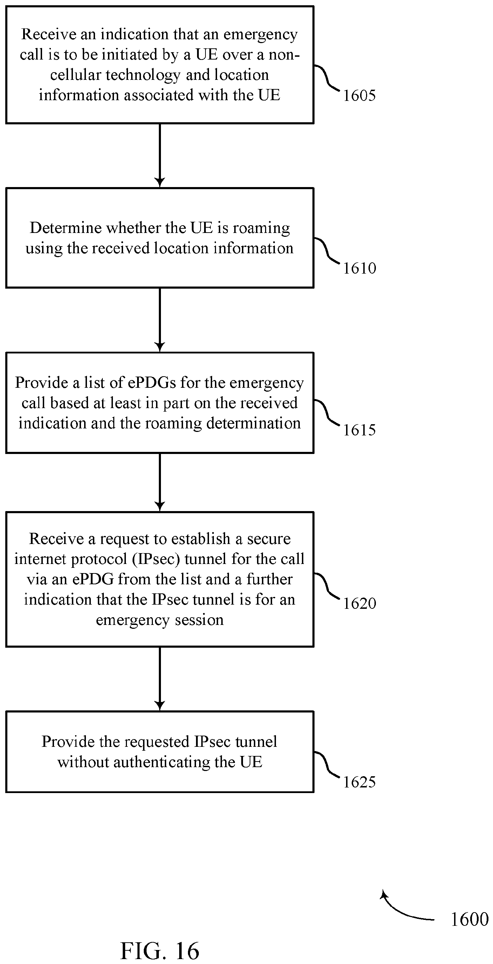

The components of the network device 301-a may be configured to implement aspects discussed above with respect FIGs. 1-3 and 8-10, and those aspects may not be repeated here for the sake of brevity. Moreover, the components of network device 301-a may be configured to implement aspects discussed below with respect to FIGs. 15 and 16, and those aspects may not be repeated here also for the sake of brevity.

**FIG. 12** is a flow chart illustrating an example of a method 1200 for emergency services that may be performed by a UE, in accordance with various aspects of the present disclosure. For clarity, the method 1200 is described below with reference to aspects of one or more of the terminals 110 described with reference to FIGs. 1-3 and 7, and/or aspects of one or more of the wireless devices described with reference to FIGs. 4-6. In some examples, a UE, a terminal or other wireless device may execute one or more sets of codes to control the functional elements of thereof to perform the functions described below. Additionally or alternatively, the UE, the terminal or other wireless device may perform one or more of the functions described below using special-purpose hardware.

At block 1205, the method 1200 may involve determining an emergency service is to be initiated by a UE. As discussed above, the emergency service may be prompted by user input, an occurrence of some event, or otherwise.

Then, at block 1210, the UE may initiate the emergency service over a non-cellular technology, such as WLAN, based at least in part on the determination.

At block 1215, the UE may create an identifier that contains emergency indication information. Then, at block 1220, the UE may transmit the identifier. The identifier may be transmitted as part of the emergency service initiation, as part of an FQDN, or separately to inform the network that the initiated service is an emergency call. In the case of trusted access, this may be transmitted as part of an EAP authentication between the UE and the network. Additionally and alternatively, in case of trusted access, this may be transmitted as part of a WLAN Control Protocol (WLCP) request for connectivity between the UE and the network. Additionally and alternatively, in case of untrusted access, this may be transmitted as part of a tunnel establishment request between the UE and an ePDG in the network.

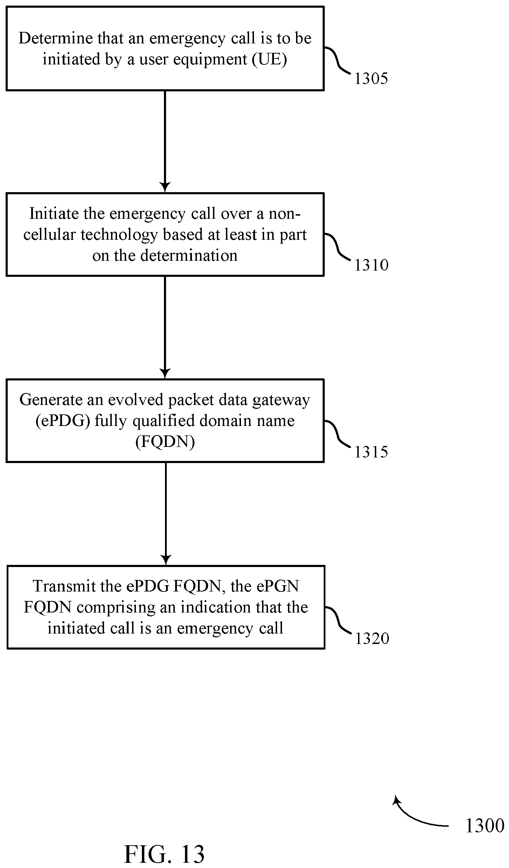

**FIG. 13** is a flow chart illustrating another example of a method 1300 for emergency services that may be performed by a UE, in accordance with various aspects of the present disclosure. For clarity, the method 1300 is described below with reference to aspects of one or more of the terminals 110 described with reference to FIGs. 1-3 and 7, and/or aspects of one or more of the wireless devices described with reference to FIGs. 4-6. In some examples, a UE, a terminal or other wireless device may execute one or more sets of codes to control the functional elements of thereof to perform the functions described below. Additionally or alternatively, the UE, the terminal or other wireless device may perform one or more of the functions described below using special-purpose hardware.

At block 1305, the method may involve determining that an emergency service is to be initiated by a UE. Then, at block 1310, the UE may initiate the emergency service over a non-cellular technology based at least in part on the determination.

At block 1315, the UE may generate an ePDG FQDN, such as described above. Then, at block 1320, the UE may transmit the ePDG FQDN. In particular, the ePGN FQDN may include an indication that the initiated service is an emergency call, as well as other information such as described above.

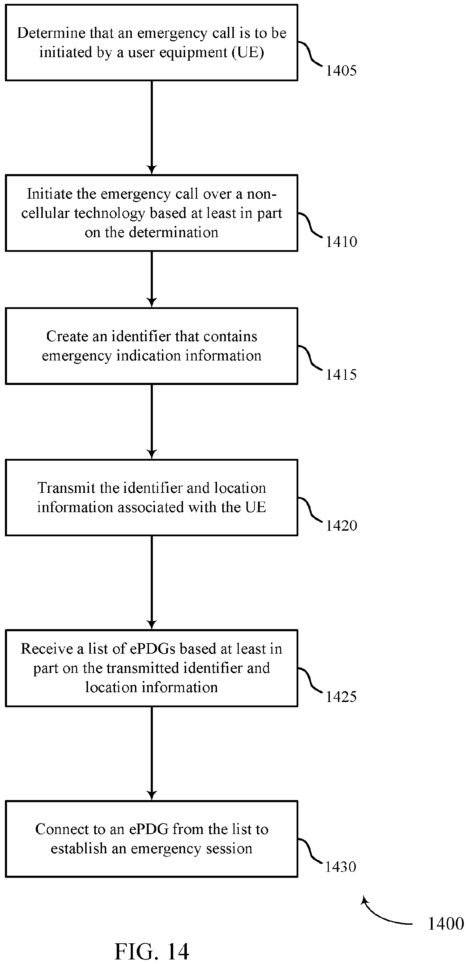

**FIG. 14** is a flow chart illustrating yet another example of a method 1400 for emergency services that may be performed by a UE, in accordance with various aspects of the present disclosure. For clarity, the method 1400 is described below with reference to aspects of one or more of the terminals 110 described with reference to FIGs. 1-3 and 7, and/or aspects of one or more of the wireless devices described with reference to FIGs. 4-6. In some examples, a UE, a terminal or other wireless device may execute one or more sets of codes to control the functional elements of thereof to perform the functions described below. Additionally or alternatively, the UE, the terminal or other wireless device may perform one or more of the functions described below using special-purpose hardware.

At block 1405, the method 1400 may involve determining that an emergency service is to be initiated by a UE. Then, at block 1410, the UE may initiate the emergency service over a non-cellular technology based at least in part on the determination.

Next, at block 1415, the UE may create an identifier that contains emergency indication information. At block 1420, the UE may transmit the identifier. The UE may include location information and PLMN information associated with the UE. In response, at block 1425, the UE may receive a list of ePDGs based at least in part on the transmitted indication, location information, and PLMN information. Then, at block 1430, the UE may connect to an ePDG from the list to establish an emergency session.

The methods 1200-1400 may provide support for wireless emergency services. It should be noted that these methods are just example implementations and that the operations of such methods may be rearranged, combined or otherwise modified such that other implementations are possible.

**FIG. 15** is a flow chart illustrating an example of a method 1500 for emergency services that may be performed by a network device, in accordance with various aspects of the present disclosure. For clarity, the method 1500 is described below with reference to aspects of one or more of the base stations 105 described with reference to FIGs. 1 and 2, and/or aspects of one or more of the network devices described with reference to FIGs. 3 and 8-11. In some examples, a base station or other network device may execute one or more sets of codes to control the functional elements of thereof to perform the functions described below. Additionally or alternatively, the base station or other network device may perform one or more of the functions described below using special-purpose hardware.

At block 1505, the method 1500 may involve receiving an indication that an emergency service is to be initiated by a UE over a non-cellular technology. In response, at block 1510, a network device may provide a list of ePDGs for the emergency service based at least in part on the received indication.

**FIG. 16** is a flow chart illustrating another example of a method 1600 for emergency service that may be performed by a network device, in accordance with various aspects of the present disclosure. For clarity, the method 1500 is described below with reference to aspects of one or more of the base stations 105 described with reference to FIGs. 1 and 2, and/or aspects of one or more of the network devices described with reference to FIGs. 3 and 8-11. In some examples, a base station or other network device may execute one or more sets of codes to control the functional elements of thereof to perform the functions described below. Additionally or alternatively, the base station or other network device may perform one or more of the functions described below using special-purpose hardware.

At block 1605, the method 1600 may involve receiving an indication that an emergency service is to be initiated by a UE over a non-cellular technology and location information associated with the UE, and PLMN information associated with the UE. Then, at block 1610, a network device may determine whether the UE is roaming using the received location information or PLMN information. Next, at block 1615, the network device may provide a list of ePDGs for the emergency call based at least in part on the received indication and the roaming determination.

At block 1620, the network device may receive a request to establish an IPsec tunnel via an ePDG from the list and an additional indication that the IPsec tunnel is for an emergency session. The additional indication may be received as part of the request or separately. Then, at block 1625, the network device may provide the requested IPsec tunnel without authenticating the UE.

The methods 1500 and 1600 may provide support for wireless IMS emergency calls. It should be noted that these methods are just example implementations and that the operations of such methods may be rearranged, combined or otherwise modified such that other implementations are possible.

The detailed description set forth above in connection with the appended drawings describes examples and does not represent the only examples that may be implemented or that are within the scope of the claims. The terms "example" and "exemplary," when used in this description, mean "serving as an example, instance, or illustration," and not "preferred" or "advantageous over other examples." The detailed description includes specific details for the purpose of providing an understanding of the described techniques. These techniques, however, may be practiced without these specific details. In some instances, well-known structures and apparatuses are shown in block diagram form in order to avoid obscuring the concepts of the described examples.

Information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

The various illustrative blocks and components described in connection with the disclosure herein may be implemented or performed with a general-purpose processor, a digital signal processor (DSP), an ASIC, an FPGA or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, *e.g.,* a combination of a DSP and a microprocessor, multiple microprocessors, one or more microprocessors in conjunction with a DSP core, or any other such configuration.

The functions described herein may be implemented in hardware, software executed by a processor, firmware, or any combination thereof. If implemented in software executed by a processor, the functions may be stored on or transmitted over as one or more instructions or code on a computer-readable medium. Other examples and implementations are within the scope and spirit of the disclosure and appended claims. For example, due to the nature of software, functions described above can be implemented using software executed by a processor, hardware, firmware, hardwiring, or combinations of any of these. Features implementing functions may also be physically located at various positions, including being distributed such that portions of functions are implemented at different physical locations. As used herein, including in the claims, the term "and/or," when used in a list of two or more items, means that any one of the listed items can be employed by itself, or any combination of two or more of the listed items can be employed. For example, if a composition is described as containing components A, B, and/or C, the composition can contain A alone; B alone; C alone; A and B in combination; A and C in combination; B and C in combination; or A, B, and C in combination. Also, as used herein, including in the claims, "or" as used in a list of items (for example, a list of items prefaced by a phrase such as "at least one of" or "one or more of') indicates a disjunctive list such that, for example, a list of "at least one of A, B, or C" means A or B or C or AB or AC or BC or ABC (*i.e.,* A and B and C).

Computer-readable media includes both computer storage media and communication media including any medium that facilitates transfer of a computer program from one place to another. A storage medium may be any available medium that can be accessed by a general purpose or special purpose computer. By way of example, and not limitation, computer-readable media can comprise RAM, ROM, EEPROM, flash memory, CD-ROM or other optical disk storage, magnetic disk storage or other magnetic storage devices, or any other medium that can be used to carry or store desired program code means in the form of instructions or data structures and that can be accessed by a general-purpose or special-purpose computer, or a general-purpose or special-purpose processor. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, include compact disc (CD), laser disc, optical disc, digital versatile disc (DVD), floppy disk and Blu-ray disc where disks usually reproduce data magnetically, while discs reproduce data optically with lasers. Combinations of the above are also included within the scope of computer-readable media.

The previous description of the disclosure is provided to enable a person skilled in the art to make or use the disclosure. Various modifications to the disclosure will be readily apparent to those skilled in the art, and the generic principles defined herein may be applied to other variations without departing from the scope of the disclosure. Thus, the disclosure is not to be limited to the examples and designs described herein but is to be accorded the broadest scope consistent with the principles and novel features disclosed herein.

## Claims

1. A method for wireless communication, performed by a user equipment ,UE, comprising:
determining (1305, 1405, 1205) that an emergency service is to be initiated by the UE (110);
initiating (1310, 1410, 1210) the emergency service over a non-cellular technology based at least in part on the determination;
creating (1415, 1215) an identifier that contains emergency indication information; and
transmitting (1420, 1220) the identifier;
generating (1315) an evolved packet data gateway, ePDG, fully qualified domain name, FQDN; and
transmitting (1320) the ePDG FQDN wherein the ePDG FQDN comprises location information associated with the UE (110).

2. The method of claim 1, wherein the identifier comprises a label in front of a host label or an ePDG label or wherein the UE (110) is connected to an ePDG associated with a non-emergency call.

3. The method of claim 1, further comprising:
providing a null public land mobile network, PLMN, label in a PLMN field of the ePDG FQDN.

4. The method of claim 1, wherein the location information comprises a label in front of a mobile network code, MNC, label or in a public land mobile network, PLMN field of the ePDG FQDN or at least a last public land mobile network, PLMN, to which the UE (110) was connected, or a last known cell, LKC, to which the UE (110) was last connected, or a medium access control, MAC, address of a Wi-Fi access point to which the UE (110) is connected, or a geo-location of the UE (110), or a combination thereof.

5. The method of claim 1, further comprising:
receiving (1425) a list of ePDGs based at least in part on the transmitted identifier and ePDG FQDN; and
connecting (1430) to an ePDG from the list to establish an emergency session.

6. The method of claim 5, wherein connecting to the ePDG from the list comprises:
disconnecting from a current ePDG; and
reconnecting to the current ePDG when the current ePDG is included in the list; or
remaining connected to a current ePDG when the current ePDG is included in the list.

7. The method of claim 5, wherein connecting to the ePDG from the list to establish the emergency session comprises:
initiating a procedure to establish a secure internet protocol, IPsec, tunnel; and
indicating that the IPsec tunnel is for an emergency session; and
wherein indicating that the IPsec tunnel is for an emergency session comprises:
providing values for an emergency initial attach and an emergency handover attach as part of the procedure; or
requesting connectivity with a service type set to indicate emergency service.

8. The method of claim 1, wherein the UE (110) lacks a valid subscription with respect to a cellular technology serving a current location of the UE (110); or
wherein the UE (110) is unable to be authenticated to a cellular technology serving a current location of the UE (110); or
wherein the UE (110) is unauthorized for packet-switched, PS, service on a cellular technology serving a current location of the UE (110).

9. The method of claim 1, wherein the non-cellular technology comprises a Wi-Fi technology.

10. An apparatus for wireless communication, comprising means to carry out the method of claim 1.

11. A method for wireless communication, comprising:
receiving (1505, 1605) an identifier that provides an indication that an emergency call is to be initiated by a user equipment (110), UE, over a non-cellular technology; and
receiving an ePDG fully qualified domain name, FQDN, comprising location information associated with the UE; and
providing (1510) a list of evolved packet data gateways, ePDGs, for the emergency call based on the received identifier and on the received location information and the ePDG FQDN.

12. The method of claim 11, further comprising:
receiving (1620) a request to establish a secure internet protocol, IPsec, tunnel for the emergency call via an ePDG from the list; and
receiving a further indication that the IPsec tunnel is for an emergency session; or
providing (1625) the requested IPsec tunnel without authenticating the UE.

13. The method of claim 11, wherein providing the list of ePDGs comprises:
determining that the UE is roaming based on location or PLMN information for the UE; and
providing an empty list when the UE is roaming; or
providing a list of ePDG addresses and information that identifies a public land mobile network, PLMN, with which each ePDG address is associated.

14. An apparatus for wireless communication, comprising means to carry out the method of claim 11.

15. A non-transitory computer-readable medium storing code for communication at a wireless device, the code comprising instructions executable by a processor to cause the wireless device to carry out the method of any of claim 1-9 or 11-13.

## Patentansprüche

1. Ein Verfahren zur drahtlosen Kommunikation, das durch eine Benutzerausrüstung, UE (UE = User Equipment), durchgeführt wird, wobei das Verfahren umfasst:
Bestimmen (1305, 1405, 1205), dass ein Notfall-Dienst durch die UE (110) zu initiieren ist;
Initiieren (1310, 1410, 1210) des Notfall-Diensts über eine nicht-zellulare Technologie, zumindest teilweise basierend auf der Bestimmung;
Erzeugen (1415, 1215) eines Identifikators, der Notfall-Anzeige-Informationen enthält; und
Übertragen (1420, 1220) des Identifikators;
Erzeugen (1315) eines ePDG-FQDN (ePDG = Evolved Packet Data Gateway, FQDN = Fully Qualified Domain Name); und
Übertragen (1320) des ePDG-FQDN, wobei der ePDG-FQDN Standortinformationen umfasst, die mit der UE (110) assoziiert sind.

2. Verfahren nach Anspruch 1, wobei der Identifikator ein Label vor einem Host-Label oder ein ePDG-Label umfasst oder wobei die UE (110) mit einem ePDG verbunden ist, der einem Nicht-Notfall-Anruf zugeordnet ist.

3. Verfahren nach Anspruch 1, wobei das Verfahren ferner umfasst:
Bereitstellen eines Null-PLMN-Labels (PLMN = Public Land Mobile Network) in einem PLMN-Feld des ePDG-FQDN.

4. Verfahren nach Anspruch 1, wobei die Standortinformationen ein Label vor einem MNC-Label (MNC = Mobile Network Code) oder in einem PLMN-Feld (PLMN = Public Land Mobile Network) des ePDG-FQDN oder zumindest eines Last-PLMN, mit der die UE (110) verbunden war, oder eine Last-Known-Cell, LKC, mit der die UE (110) zuletzt verbunden war, oder eine MAC-Addresse (MAC = Medium Access Control) eines Wi-Fi-Zugangspunktes, mit dem die UE (110) verbunden ist, oder ein Geo-Standort der UE (110), oder eine Kombination davon, umfassen.

5. Verfahren nach Anspruch 1, wobei das Verfahren ferner umfasst:
Empfangen (1425) einer Liste von ePDGs, zumindest teilweise basierend auf dem übertragenen Identifikator und ePDG-FQDN; und
Verbinden (1430) mit einem ePDG von der Liste, um eine Notfallsitzung einzurichten.

6. Verfahren nach Anspruch 5, wobei das Verbinden mit dem ePDG von der Liste umfasst:
Trennen von einem aktuellen ePDG; und
Wiederverbinden mit dem aktuellen ePDG, wenn der aktuelle ePDG in der Liste enthalten ist; oder
mit einem aktuellen ePDG verbunden bleiben, wenn der aktuelle ePDG in der Liste enthalten ist.

7. Verfahren nach Anspruch 5, wobei das Verbinden mit dem ePDG von der Liste, um die Notfallsitzung einzurichten, umfasst:
Initiieren eines Verfahrens, um einen IPsec-Tunnel (IPsec = Secure Internet Protocol) einzurichten; und
Anzeigen, dass der IPsec-Tunnel für eine Notfallsitzung vorgesehen ist; und
wobei das Anzeigen, dass der IPsec-Tunnel für eine Notfallsitzung vorgesehen ist, umfasst:
Bereitstellen von Werten für einen Notfall-Initial-Anschluss und einen Notfall-Handover-Anschluss als Teil des Verfahrens; oder
Anfordern einer Konnektivität mit einem Dienst-Typ, der eingestellt ist, um den Notfall-Dienst anzuzeigen.

8. Verfahren nach Anspruch 1, wobei die UE (110) kein gültiges Abonnement in Bezug auf eine zellulare Technologie hat, die einen aktuellen Standort der UE (110) bedient; oder
wobei die UE (110) nicht gegenüber einer zellularen Technologie, die einen aktuellen Standort der UE (110) bedient, authentifiziert werden kann; oder
wobei die UE (110) nicht für einen paketvermittelten, PS, Dienst auf einer zellularen Technologie autorisiert ist, die einen aktuellen Standort der UE (110) bedient.

9. Verfahren nach Anspruch 1, wobei die nicht-zellulare Technologie eine Wi-Fi-Technologie umfasst.

10. Eine Vorrichtung zur drahtlosen Kommunikation, wobei die Vorrichtung Mittel zum Durchführen des Verfahrens nach Anspruch 1 umfasst.

11. Ein Verfahren für drahtlose Kommunikation, wobei das Verfahren umfasst:
Empfangen (1505, 1605) eines Identifikators, der einen Anzeige bereitstellt, dass ein Notfall-Anruf durch eine Benutzervorrichtung (110), UE, über eine nicht-zellulare Technologie zu initiieren ist; und
Empfangen eines ePDG-FQDN (FQDN = Fully Qualified Domain Name), der Standortinformationen umfasst, die mit der UE assoziiert sind; und
Bereitstellen (1510) einer Liste von Evolved-Packet-Data-Gateways, ePDGs, für den Notfall-Anruf basierend auf dem empfangenen Identifikator und auf den empfangenen Standortinformationen und dem ePDG-FQDN.

12. Verfahren nach Anspruch 11, wobei das Verfahren ferner umfasst:
Empfangen (1620) einer Anforderung, einen IPsec-Tunnel (IPsec = Secure Internet Protocol) für den Notfall- Anruf über ein ePDG von der Liste einzurichten; und
Empfangen einer weiteren Anzeige, dass der IPsec-Tunnel für eine Notfallsitzung vorgesehen ist; oder
Bereitstellen (1625) des angeforderten IPsec-Tunnels ohne die UE zu authentifizieren.

13. Verfahren nach Anspruch 11, wobei das Bereitstellen der Liste von ePDGs umfasst:
Bestimmen, dass die UE basierend auf Standort- oder PLMN-Informationen für die UE Roaming betreibt; und
Bereitstellen einer leeren Liste, wenn die UE Roaming betreibt; oder
Bereitstellen einer Liste von ePDG-Adressen und Informationen, die ein Public-Land-Mobile-Netzwerk, PLMN, identifizieren, mit dem jede ePDG-Adresse assoziiert ist.

14. Eine Vorrichtung zur drahtlosen Kommunikation, wobei die Vorrichtung Mittel zum Durchführen des Verfahrens nach Anspruch 11 umfasst.

15. Ein nichtflüchtiges, computerlesbares Medium, das Code zur Kommunikation bei einer drahtlosen Vorrichtung speichert, wobei der Code Anweisungen umfasst, die durch einem Prozessor ausführbar sind, um die drahtlose Vorrichtung dazu zu veranlassen, das Verfahren nach irgendeinem der Ansprüche 1 bis 9 oder 11 bis 13 durchzuführen.

## Revendications

1. Procédé de communication sans fil, mis en œuvre par un équipement utilisateur, UE, comprenant les étapes suivantes :
la détermination (1305, 1405, 1205) qu'un service d'urgence doit être déclenché par l'UE (110) ;
le déclenchement (1310, 1410, 1210) du service d'urgence sur une technologie non cellulaire sur la base au moins en partie de la détermination ;
la création (1415, 1215) d'un identifiant qui contient des informations d'indication d'urgence ; et
l'émission (1420, 1220) de l'identifiant ;
la génération (1315) d'un nom de domaine pleinement qualifié, FQDN, de passerelle de données par paquets évoluée, ePDG ; et
l'émission (1320) du FQDN d'ePDG, dans lequel le FQDN d'ePDG comprend des informations d'emplacement associées à l'UE (110) .

2. Procédé selon la revendication 1, dans lequel l'identifiant comprend une étiquette devant une étiquette hôte ou une étiquette d'ePDG ou dans lequel l'UE (110) est connecté à une ePDG associée à un appel non urgent.

3. Procédé selon la revendication 1, comprenant en outre l'étape suivante :
la fourniture d'une étiquette de réseau mobile terrestre public, PLMN, nulle dans un champ de PLMN du FQDN de l'ePDG.

4. Procédé selon la revendication 1, dans lequel les informations de localisation comprennent une étiquette devant une étiquette de code de réseau mobile, MNC, ou dans un champ de réseau mobile terrestre public, PLMN, du FQDN de l'ePDG ou au moins un dernier réseau mobile terrestre public, PLMN, auquel l'UE (110) était connecté, ou au moins une dernière cellule connue, LKC, à laquelle l'UE (110) était connecté, ou une adresse de contrôle d'accès au support, MAC, d'un point d'accès Wi-Fi auquel l'UE (110) est connecté, ou une géocalisation de l'UE (110), ou une combinaison de ceux-ci.

5. Procédé selon la revendication 1, comprenant en outre les étapes suivantes :
la réception (1425) d'une liste d'ePDG basée au moins en partie sur l'identifiant et le FQDN d'ePDG émis ; et
la connexion (1430) à une ePDG provenant de la liste pour établir une session d'urgence.

6. Procédé selon la revendication 5, dans lequel la connexion à l'ePDG provenant de la liste comprend les étapes suivantes :
la déconnexion d'une ePDG courante ; et
la reconnexion à l'ePDG courante quand l'ePDG courante est incluse dans la liste ; ou
le maintien connecté à une ePDG courante quand l'ePDG courante est incluse dans la liste.

7. Procédé selon la revendication 5, dans lequel la connexion à l'ePDG provenant de la liste pour établir la session d'urgence comprend les étapes suivantes :
le déclenchement d'une procédure pour établir un tunnel de protocole Internet sécurisé, IPsec ; et
l'indication que le tunnel IPsec est destiné à une session d'urgence ; et
dans lequel l'indication que le tunnel IPsec est destiné à une session d'urgence comprend les étapes suivantes :
la fourniture de valeurs pour une liaison initiale d'urgence et une liaison de transfert d'urgence dans le cadre de la procédure ; ou
la requête de connectivité avec un type de service défini pour indiquer un service d'urgence.

8. Procédé selon la revendication 1, dans lequel l'UE (110) n'a pas d'abonnement valide pour une technologie cellulaire desservant un emplacement courant de l'UE (110) ; ou
dans lequel l'UE (110) ne peut pas être authentifié à une technologie cellulaire desservant un emplacement courant de l'UE (110) ; ou
dans lequel l'UE (110) n'est pas autorisé pour un service à commutation de paquets, PS, sur une technologie cellulaire desservant une position courante de l'UE (110).

9. Procédé selon la revendication 1, dans lequel la technologie non cellulaire comprend une technologie Wi-Fi.

10. Appareil de communication sans fil, comprenant des moyens pour mettre en œuvre le procédé selon la revendication 1.

11. Procédé de communication san fil, comprenant les étapes suivantes :
la réception (1505, 1605) d'un identifiant qui assure qu'une indication qu'un appel d'urgence doit être déclenché par un équipement utilisateur, UE, (110) sur une technologie non cellulaire ; et
la réception d'un nom de domaine pleinement qualifié, FQDN, d'ePDG comprenant des informations associées à l'UE ; et
la fourniture (1510) d'une liste de passerelles de données par paquets évoluées, ePDG, pour l'appel d'urgence sur la base de l'identifiant reçu et des informations d'emplacement reçues et sur le FQDN de l'ePDG.

12. Procédé selon la revendication 11, comprenant en outre les étapes suivantes :
la réception (1620) d'une requête pour établir un tunnel de protocole Internet sécurisé, IPsec, pour l'appel d'urgence via une ePDG provenant de la liste ; et
la réception d'une indication supplémentaire que le tunnel IPsec est destiné à une session d'urgence ; ou
la fourniture (1625) du tunnel IPsec demandé sans authentification de l'UE.

13. Procédé selon la revendication 11, dans lequel la fourniture de la liste d'ePDG comprend les étapes suivantes :
la détermination que l'UE est en itinérance sur la base d'informations de localisation ou d'informations de PLMN pour l'UE ; et
la fourniture d'une liste vide quand l'UE est en itinérance ; ou
la fourniture d'une liste d'adresses d'ePDG et d'informations qui identifient un réseau mobile terrestre public, PLMN, avec lequel chaque adresse d'ePDG est associée.

14. Appareil de communication sans fil, comprenant des moyens pour mettre en œuvre le procédé selon la revendication 11.

15. Support lisible par ordinateur non transitoire stockant un code pour une communication au niveau d'un dispositif sans fil, le code comprenant des instructions exécutables par un processeur pour forcer le dispositif sans fil à mettre en œuvre le procédé selon l'une quelconque des revendications 1 à 9 ou 11 à 13.
